(19)

**Europäisches Patentamt**

**European Patent Office**

**Office européen des brevets**

(11) **EP 4 726 453 A2**

(12) **EUROPEAN PATENT APPLICATION**

(43) Date of publication:
**15.04.2026 Bulletin 2026/16**

(21) Application number: **26157888.4**

(22) Date of filing: **11.02.2026**

(51) International Patent Classification (IPC):
**G02B 9/62** (2006.01)    **G02B 13/00** (2006.01)
**G02B 13/06** (2006.01)

(52) Cooperative Patent Classification (CPC):
**G02B 13/0045; G02B 9/62; G02B 13/006; G02B 13/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **24.02.2025 CN 202510203495**

(71) Applicant: **Jiangxi OFILM Optical Co. Ltd.**
**Nanchang, Jiangxi 330096 (CN)**

(72) Inventors:
• **YUE, Guoqiang**
 **Nanchang, 330096 (CN)**
• **PAN, Peiyan**
 **Nanchang, 330096 (CN)**
• **ZENG, Han**
 **Nanchang, 330096 (CN)**

(74) Representative: **Metida**
**Gyneju str. 16**
**01109 Vilnius (LT)**

(54) **OPTICAL LENS, IMAGE MODULE, AND TERMINAL DEVICE**

(57) An optical lens (100) includes: a first lens (L1), a second lens (L2), and a sixth lens (L6) each having negative refractive power, a third lens (L3) having refractive power, a fourth lens (L4), a fifth lens (L5), and a seventh lens (L7) each having positive refractive power. Object side surfaces (S1, S3, S5, S7, S9, S13) of the first, second, third, fourth, fifth, and seventh lenses (L1, L2, L3, L4, L5, L7), and imaging side surfaces (S6, S10, S12) of the third, fifth, and sixth lenses (L2, L3, L5) are both convex near the optical axis (O). Imaging side surfaces (S2, S4) of the first lens (L1) and the second lens (L2) and object side surfaces (S5, S11) of the third lens (L3) and the sixth lens (L6) are both concave near the optical axis (O). The optical lens (100) satisfies: 190deg≤FOV≤210deg, and 1.65<IMGH/F<1.8.

FIG. 1

EP 4 726 453 A2

**Description**

FIELD

The present invention relates to field of imaging, and in particular to an optical lens, an image module, and a terminal device.

BACKGROUND

Dash camera is a key component for the autonomous driving assistance system to obtain external information. With the rapid development of the autonomous driving assistance system, the performance requirements for the front-view optical lens are getting higher and higher. At the same time, as the requirements for night driving in autonomous driving gradually increase, the requirements for night vision functions of the on-board lens are also getting higher and higher. However, in the related technologies, the on-board lenses have relatively serious aberration problems such as chromatic aberration, astigmatism and distortion. Moreover, the overall volume of the on-board lenses in the related technologies is relatively large, which cannot meet the requirements of miniaturization design and wide-angle imaging.

SUMMARY

The present disclosure discloses an optical lens, an image module, and a terminal device, which may achieve a large field of view angle and improve the imaging quality while meeting the miniaturization design of optical lens.

In order to achieve the above objects, in a first aspect, the present application discloses an optical lens. The optical lens with a total of seven lenses having refractive power, from an object side to an imaging side along an optical axis, sequentially includes a first lens, a second lens, a third lens, a fourth lens, a fifth lens, a sixth lens, and a seventh lens. The first lens has negative refractive power, an object side surface of the first lens is convex near the optical axis, and an imaging side surface of the first lens is concave near the optical axis. The second lens has negative refractive power, an object side surface of the second lens is convex near the optical axis, and an imaging side surface of the second lens is concave near the optical axis. The third lens has refractive power, an object side surface of the third lens is concave near the optical axis, and an imaging side surface of the third lens is convex near the optical axis. The fourth lens has positive refractive power, and an object side surface of the fourth lens is convex near the optical axis. The fifth lens has positive refractive power, an object side surface and an imaging side surface of the fifth lens are both convex near the optical axis. The sixth lens has negative refractive power, an object side surface of the sixth lens is concave near the optical axis, and an imaging side surface of the sixth lens is convex near the optical axis. The seventh lens has positive refractive power, and an object side surface of the seventh lens is convex near the optical axis. The optical lens satisfying following conditional expressions: $190\deg \leq FOV \leq 210\deg$, and $1.65 < IMGH/F < 1.8$. FOV is the maximum field of view angle of the optical lens, IMGH is half of an image height corresponding to the maximum field of view angle of the optical lens, and F is a focal length of the optical lens.

In the above optical lens, in order to meet the requirements of both miniaturization, large field of view angle and small distortion of the optical lens, the first lens has negative refractive power, and the object side surface and the imaging side surface of the first lens are convex and concave respectively near the optical axis, so that the first lens is formed as a concave-convex lens, which can effectively collect the incident light of a large field of view angle, allowing more light to enter the optical lens, thereby enabling the optical lens to have a large field of view angle. The second lens also has negative refractive power, and the object side surface and the imaging side surface of the second lens are convex and concave respectively near the optical axis, which can collect the light from the first lens and also allow the light to enter the optical lens gently, thereby correcting the distortion of the optical lens and reducing the aberration generated by the optical lens, so that the imaging quality may be improved. The third lens has refractive power, and the object side surface and the imaging side surface of the third lens are concave and convex respectively near the optical axis, which is conducive to correcting the field curvature of the optical lens, and can also collect and compress the light, allowing the light to gently transition to the subsequent lenses. The fourth lens has positive refractive power, and the object side surface of the fourth lens is convex near the optical axis, which is conducive to correcting the aberration of the optical lens and reducing the incident angle of the light after passing through the aperture, allowing more light to enter the optical lens. The fifth lens has positive refractive power, and both the object side surface and the imaging side surface of the fifth lens are convex near the optical axis, and the sixth lens has negative refractive power, with the object side surface being concave and the image side being convex near the optical axis, so that the fifth lens and the sixth lens can cooperate to eliminate chromatic aberration and correct the astigmatism of the optical lens, thereby improving the imaging quality of the optical lens. The seventh lens has positive refractive power, and the object side surface of the seventh lens is convex near the optical axis, which can converge the light and reduce the total length of the optical lens, further achieving the miniaturization design of the optical lens.

The optical lens to satisfy the conditional expression 190deg≤FOV≤210deg, which enable the optical lens to have a large field of view angle and can achieve wide-angle imaging.

The optical lens satisfies the conditional expression 1.65<IMGH/F<1.8, which can meet the requirements of the optical lens being adapted to a large-sized imaging surface and the miniaturization design of the optical lens, while also meeting the requirements of a large target surface.

In some embodiments, the optical lens further satisfies at least one of following conditional expressions: 7<TTL/IMGH<7.3, 12<TTL/F<13, and CT45/CT34>2, wherein, TTL is a distance from the object side surface of the first lens to an image plane of the optical lens along the optical axis, CT45 is a distance along the optical axis from an imaging side surface of the fourth lens to the object side surface of the fifth lens, and CT34 is a distance along the optical axis from the imaging side surface of the third lens to the object side surface of the fourth lens.

When the optical lens satisfies the conditional expression 7<TTL/IMGH<7.3, which can achieve large target surface imaging while taking into account the miniaturization design of the optical lens, thereby improving the imaging clarity of the optical lens and further improving the imaging quality of the optical lens.

When the optical lens satisfies the conditional expression 12<TTL/F<13, which can achieve the miniaturization design of the optical lens while taking into account the wide-angle characteristics of the optical lens.

When the optical lens satisfies the conditional expression CT45/CT34>2, which can reasonably control a distance between the fourth lens and the fifth lens and a distance between the third lens and the fourth lens, thereby allowing an arrangement of the distance between the third lens, the fourth lens, and the fifth lens to be appropriate, which is conducive to the miniaturization design of the optical lens. Especially when the aperture is located between the fourth lens and the fifth lens, a reasonable distance may further allow the light to enter the fourth lens and the fifth lens gently from the third lens, thereby correcting the distortion of the optical lens and reducing the aberration generated by the optical lens, so that the imaging quality may be improved.

In some embodiments, the optical lens further satisfies at least one of following conditional expressions: -6<F1/F<-4, 3<F4/F<8, and 1<F1/F2<3, wherein, F1 is a focal length of the first lens, F4 is a focal length of the fourth lens, and F2 is a focal length of the second lens.

When the optical lens satisfies the conditional expressions -6<F1/F<-4 and 3<F4/F<8, it may allow the focal lengths of the first lens and the fourth lens to be reasonable, thereby allowing the light to be more focused when entering the optical lens, which is conducive to improving the imaging quality of the optical lens.

When the optical lens satisfies the conditional expression 1<F1/F2<3, it may reasonably control the focal lengths of the first lens and the second lens, allowing the refractive power of the first lens and the second lens to be reasonable, thereby facilitating the light to enter the second lens gently from the first lens, which can correct the distortion of the optical lens and reduce the aberration generated by the optical lens, so that the imaging quality may be improved.

In some embodiments, the optical lens further satisfies at least one of following conditional expressions: 1.5<SD1/SD3<2.1, 1.1<SD3/IMGH<1.4, 0.9<SD8/SD9<1.2, and -3<R10/SD10<-1, wherein, SD1 is the maximum effective semi-aperture of the object side surface of the first lens, SD3 is the maximum effective semi-aperture of the object side surface of the second lens, SD8 is the maximum effective semi-aperture of an imaging side surface of the fourth lens, SD9 is the maximum effective semi-aperture of the object side surface of the fifth lens, R10 is a radius of curvature at the imaging side surface of the fifth lens at the optical axis, and SD10 is the maximum effective semi-aperture of the imaging side surface of the fifth lens.

When the optical lens satisfies the conditional expression 1.5<SD1/SD3<2.1, it can reasonably control a ratio of the maximum effective semi-aperture of the object side surface of the first lens to that of the second lens, thereby allowing the transition between the object side surfaces of the first lens and the second lens to be more gentle, which is conducive to the light entering the second lens after passing through the first lens, thereby facilitating the control of the light path.

When the optical lens satisfies the conditional expression 1.1<SD3/IMGH<1.4, it can allow the maximum effective semi-aperture of the object side surface of the second lens to roughly match the image plane of the optical lens, which is conducive to more light entering the imaging surface of the optical lens, thereby achieving large image surface imaging.

When the optical lens satisfies the conditional expression 0.9<SD8/SD9<1.2, it can control the maximum effective semi-aperture s of the image side surface of the fourth lens and the object side surface of the fifth lens, thereby allowing the transition between the fourth lens and the fifth lens to be gentle, reducing a step difference between them, and facilitating the light to enter the fifth lens gently, which is conducive to lowering the incident angle of the light after passing through the aperture, thereby allowing more light to enter the imaging side of the optical lens, and improving the illuminance of the optical lens.

When the optical lens satisfies the conditional expression -3<R10/SD10<-1, it can reasonably control the surface shape of the image side surface of the fifth lens, thereby preventing the fifth lens from being too curved, which is conducive to the processing of the fifth lens.

In some embodiments, the optical lens further satisfies at least one of following conditional expressions: -5<CT3/SAGS5<-2, 1.2<CT5/ET5<2.1, and 1.2<CT7/ET7<1.5, wherein, CT3 is a thickness of the third lens at the optical axis, SAGS5 is a distance along the optical axis from the maximum effective semi-aperture of the object side surface of the third lens to an intersection point of the object side surface of the first lens and the optical axis, CT5 is a thickness of the fifth lens at the optical axis, ET5 is a distance in a direction parallel to the optical axis from the maximum effective aperture of the object side surface of the fifth lens to the maximum effective aperture of the imaging side surface of the fifth lens, CT7 is a thickness of the seventh lens at the optical axis, and ET7 is a distance in the direction parallel to the optical axis from the maximum effective aperture of the object side surface of the seventh lens to the maximum effective aperture of an imaging side surface of the seventh lens.

Since the third lens is a concave-convex lens, when the optical lens satisfies the conditional expression -5<CT3/SAGS5<-2, it can reasonably control the thickness of the third lens, while taking into account the surface shape design of the third lens, avoiding the situation where the third lens is too curved, resulting in insufficient thickness that would adversely affect moldability, or avoiding the situation where the third lens is not sufficiently curved, resulting in excessive thickness that hinders the miniaturization design of the optical lens.

When the optical lens satisfies the conditional expressions 1.2<CT5/ET5<2.1 and 1.2<CT7/ET7<1.5, it can reasonably control a ratio of the maximum thickness to the minimum thickness of each lens, thereby optimizing the surface shape of each lens, facilitating the effective convergence of incident light at large angles, and allowing the light passing through the corresponding lenses to have a smaller deflection angle, thereby reducing the generation of stray light and ensuring good imaging performance.

In some embodiments, the optical lens further satisfies at least one of following conditional expressions: 1.2<R6/R5<1.4, -2<R9/R10<-1, and R11/R12<0.5, wherein, R5 is a radius of curvature of the object side surface of the third lens at the optical axis, R6 is a radius of curvature of the imaging side surface of the third lens at the optical axis, R9 is a radius of curvature of the object side surface of the fifth lens at the optical axis, and R10 is a radius of curvature of the imaging side surface of the fifth lens at the optical axis, R11 is a radius of curvature of the object side surface of the sixth lens at the optical axis, and R12 is a radius of curvature of the imaging side surface of the sixth lens at the optical axis.

When the optical lens satisfies the conditional expression 1.2<R6/R5<1.4, by reasonably controlling the radii of curvature at the object side surface and the imaging side surface of the third lens at the optical axis, the incident light refracted by the first lens and the second lens can be effectively collected and compressed, allowing the light to gently transition to the subsequent lenses, reducing aberration, and improving the imaging quality of the optical lens.

When the optical lens satisfies the conditional expression -2<R9/R10<-1, by reasonably matching a ratio of the radii of curvature of the object side surface and the imaging side surface of the fifth lens at the optical axis, the surface shape difference between the object side surface and the imaging side surface of the fifth lens can be reasonable, which is conducive to controlling the shape of the fifth lens and thereby correcting the aberration generated by itself to improve the imaging quality.

When the optical lens satisfies the conditional expression R11/R12<0.5, by reasonably matching a ratio of the radii of curvature of the object side surface and the imaging side surface of the sixth lens at the optical axis, the surface shape difference between the object side surface and the imaging side surface of the sixth lens can be reasonable, which is conducive to controlling the shape of the sixth lens and thereby correcting the aberration generated by itself to improve the imaging quality.

In some embodiments, the optical lens further satisfies at least one of following conditional expressions: -10<F1/CT1<-5, F7/CT7<5, and 0.9<(CT1+CT2)/CT12<1.3, wherein, F1 is a focal length of the first lens, CT1 is a thickness of the first lens at the optical axis, F7 is a focal length of the seventh lens, CT7 is a thickness of the seventh lens at the optical axis, CT1 is a thickness of the first lens at the optical axis, CT2 is a thickness of the second lens at the optical axis, and CT12 is a distance from the imaging side surface of the first lens to the object side surface of the second lens along the optical axis.

When the optical lens satisfies the conditional expressions -10<F1/CT1<-5 and F7/CT7<5, it can reasonably relationship between the focal length and thickness of each lens, thereby facilitating aberration correction and improving the assembly yield of the optical lens.

When the optical lens satisfies the conditional expression 0.9<(CT1+CT2)/CT12<1.3, a ratio of a sum of the thicknesses of the first lens and the second lens along the optical axis to the distance between the first lens and the second lens along the optical axis can be reasonably arranged, allowing the assembly of the first lens and the second lens to be more compact, which is conducive to the miniaturization design of the optical lens.

In some embodiments, the optical lens further satisfies at least one of following conditional expressions: 0.52<DOS/TTL<0.65, 110deg<FOV*F/IMGH<120deg, and 3<CTMAX/CTMIN<4.2, wherein, DOS is a distance from the object side surface of the first lens to the aperture along the optical axis, TTL is a distance from the object side surface of the first lens to an image plane of the optical lens along the optical axis, CTMAX is the maximum thickness of a lens among the first lens to the seventh lens along the optical axis, and CTMIN is the minimum thickness of a lens among the first lens to the seventh lens along the optical axis.

When the optical lens satisfies the conditional expression 0.52<DOS/TTL<0.65, a position of the aperture may be reasonably controlled, which not only facilitates the miniaturization design of the optical lens but also controls the amount of light passing through the aperture, thereby facilitating the adjustment of the brightness and contrast of the optical lens.

When the optical lens satisfies the conditional expression 110deg<FOV*F/IMGH<120deg, by reasonably controlling a mutual relationship among a total effective focal length of the optical lens, the maximum field of view angle of the optical lens, and the image height corresponding to the maximum field of view angle of the optical lens, a large-angle resolution of the optical lens may be achieved, which is helpful to meet the requirements of small distortion and large field of view angle of the optical lens while improving the overall effect of the optical lens.

When the optical lens satisfies the conditional expression 3<CTMAX/CTMIN<4.2, by controlling a ratio of the maximum thickness of the lens to the minimum thickness of the lens among the seven lenses, the thicknesses of each lens may be controlled, thereby facilitating the miniaturization design of the optical lens during assembly.

In a second aspect, the present application discloses an image module. The image module includes an imaging sensor and the above-mentioned optical lens, the imaging sensor is arranged on the imaging side of the optical lens

In a third aspect, the present application discloses a terminal device. The terminal device includes a main body and the above-mentioned image module, the image module is arranged in the main body.

## BRIEF DESCRIPTION OF THE DRAWINGS

To better describe and illustrate embodiments and/or examples of those inventions disclosed herein, reference may be made to one or more of the accompanying drawings. The additional details or examples used to describe the drawings should not be construed as limiting the scope of any of the disclosed inventions, the embodiments and/or examples presently described, and the best modes currently understood of these inventions.

FIG. 1 is a schematic structure diagram of an optical lens of Embodiment 1 of the present application.
FIG. 2 is a spherical aberration diagram, astigmatism curve diagram and distortion diagram of the optical lens of the Embodiment 1 of the present application.
FIG. 3 is a schematic structure diagram of an optical lens of Embodiment 2 of the present application.
FIG. 4 is a spherical aberration diagram, astigmatism curve diagram and distortion diagram of the optical lens of the Embodiment 2 of the present application.
FIG. 5 is a schematic structure diagram of an optical lens of Embodiment 3 of the present application.
FIG. 6 is a spherical aberration diagram, astigmatism curve diagram and distortion diagram of the optical lens of the Embodiment 3 of the present application.
FIG. 7 is a schematic structure diagram of an optical lens of Embodiment 4 of the present application.
FIG. 8 is a spherical aberration diagram, astigmatism curve diagram and distortion diagram of the optical lens of the Embodiment 4 of the present application.
FIG. 9 is a schematic structure diagram of an optical lens of Embodiment 5 of the present application.
FIG. 10 is a spherical aberration diagram, astigmatism curve diagram and distortion diagram of the optical lens of the Embodiment 5 of the present application.
FIG. 11 is a schematic structure diagram of an optical lens of Embodiment 6 of the present application.
FIG. 12 is a spherical aberration diagram, astigmatism curve diagram and distortion diagram of the optical lens of the Embodiment 6 of the present application.
FIG. 13 is a schematic structure diagram of an optical lens of Embodiment 7 of the present application.
FIG. 14 is a spherical aberration diagram, astigmatism curve diagram and distortion diagram of the optical lens of the Embodiment 7 of the present application.
FIG. 15 is a schematic structure diagram of an optical lens of Embodiment 8 of the present application.
FIG. 16 is a spherical aberration diagram, astigmatism curve diagram and distortion diagram of the optical lens of the Embodiment 8 of the present application.
FIG. 17 is a schematic diagram of an image module of an embodiment of the present application.
FIG. 18 is a schematic diagram of a terminal device of an embodiment of the present application applied on an automobile.

## DETAILED DESCRIPTION

The following will describe the technical solutions of the embodiments of the present disclosure clearly and completely in combination with the accompanying drawings of the embodiments of the present disclosure. Obviously, the described embodiments are only part of the embodiments of the present disclosure, not all of them. Based on the embodiments of the present disclosure, those skilled in the art can make various modifications or variations without departing from the spirit or scope of the present disclosure. All other embodiments obtained by persons of ordinary skill in the art without making creative efforts fall within the scope of protection of the present disclosure.

In this invention, terms such as "inner" and "outer" indicate the orientation or positional relationship based on the orientation or positional relationship shown in the attached drawings. These terms are mainly used to better describe the invention and its embodiments, and are not used to limit the indicated devices, components or parts to a specific orientation or to be constructed and operated in a specific orientation.

Furthermore, some of the above terms, in addition to being used to indicate orientation or positional relationship, may also be used to indicate other meanings. For example, the term "upper" may also be used in some cases to indicate a certain attachment relationship or connection relationship. For those skilled in the art, the specific meaning of these terms in this invention can be understood based on the specific circumstances.

In addition, the terms "setting" and "located" should be understood in a broad sense. For those skilled in the art, the specific meaning of these terms in this invention can be understood based on the specific circumstances.

In addition, the terms "first", "second", etc. are mainly used to distinguish different devices, components, or parts (the specific types and constructions may be the same or different), and are not intended to indicate or imply the relative importance and quantity of the indicated devices, components, or parts. Unless otherwise specified, "multiple" means two or more.

The technical solution of the present application will be further explained in conjunction with the embodiments and accompanying drawings.

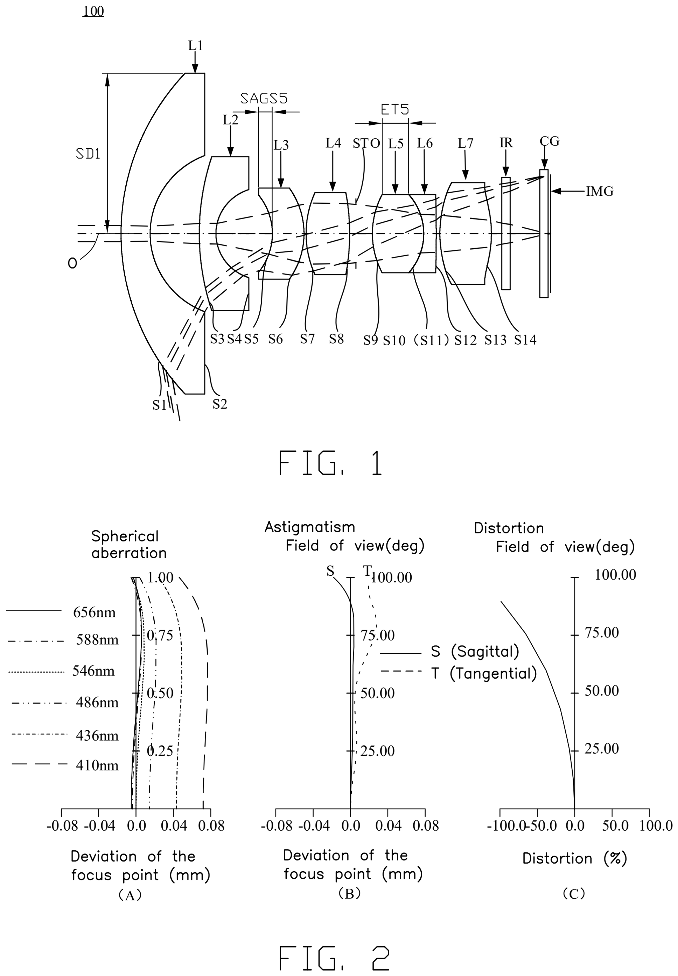

Referring to FIG. 1, in some embodiments of the present application provides an optical lens 100. The optical lens 100 sequentially includes a first lens L1, a second lens L2, a third lens L3, a fourth lens L4, a fifth lens L5, a sixth lens L6, and a seventh lens L7 along an optical axis O from an object side to an imaging side. During imaging, light enters the first lens L1, the second lens L2, the third lens L3, the fourth lens L4, the fifth lens L5, the sixth lens L6, and the seventh lens L7 in that sequence from the object side of the first lens L1 and finally forms an image on an image plane IMG of the optical lens 100.

In some embodiments, the first lens L1 has negative refractive power, the second lens L2 has negative refractive power, the third lens L3 has positive refractive power or negative refractive power, the fourth lens L4 has positive refractive power, the fifth lens L5 has positive refractive power, the sixth lens L6 has negative refractive power, the seventh lens L7 has positive refractive power.

In some embodiments, an object side surface S1 of the first lens L1 is convex near the optical axis O, an imaging side surface S2 of the first lens L1 is concave near the optical axis O, an object side surface S3 of the second lens L2 is convex near the optical axis O, an imaging side surface S4 of the second lens L2 is concave near the optical axis O, an object side surface S5 of the third lens L3 is concave near the optical axis O, an imaging side surface S6 of the third lens L3 is convex near the optical axis O, an object side surface S7 of the fourth lens L4 is convex near the optical axis O, an imaging side surface S8 of the fourth lens L4 is convex or concave near the optical axis O, an object side surface S9 and an imaging side surface S10 of the fifth lens L5 may both be convex near the optical axis O, an object side surface S11 of the sixth lens L6 is concave near the optical axis O, an imaging side surface S12 of the sixth lens L6 is convex near the optical axis O, an object side surface S13 of the seventh lens L7 is convex near the optical axis O, and an imaging side surface S14 of the seventh lens L7 may be concave or convex near the optical axis O.

In some embodiments, the above-mentioned seven lenses may all be made of plastic, which can allow the optical lens 100 to be relatively lightweight as a whole and facilitate the processing of complex surface shapes. In some embodiment, the above-mentioned seven lenses may all be made of glass, or among the above-mentioned seven lenses, at least one lens may be made of plastic while others may be made of glass.

In some embodiments, the first lens L1 to the seventh lens L7 may all be spherical lenses, or may all be aspheric lenses. In some embodiments, at least one of the first lens L1 to the seventh lens L7 may be spherical lenses while others may be aspheric lenses. For example, the first lens L1, the second lens L2, the third lens L3, the fourth lens L4, the fifth lens L5, and the sixth lens L6 may all be spherical lenses, and the seventh lens L7 may be an aspheric lens. In this way, by combining spherical lenses with aspheric lenses, high-order aberrations may be improved, thereby enhancing the imaging quality.

In some embodiments, the optical lens 100 may further include an aperture STO, and the aperture STO may be arranged between the fourth lens L4 and the fifth lens L3, the method of setting the aperture STO in a center of the optical lens 100 is conducive to the aberration correction of the optical lens 100. Of course, as other examples, the aperture STO may also be placed between other lenses, such as between the second lens L2 and the third lens L3, or between the first lens L1 and the second lens L2, the specific placement can be determined based on actual needs, and no specific limitations are made in this embodiment.

In some embodiments, the optical lens 100 may further include a filter IR, and the filter IR is arranged between the imaging side surface S14 of the seventh lens L7 and the image plane IMG of the optical lens 100. In some embodiments, the filter IR may be an infrared cut-off filter to filter out infrared light and allow visible light to pass through, thereby allowing the imaging more in line with human visual experience. In some embodiments, the filter IR may be an infrared bandpass filter to filter out visible light and allow infrared light to pass through, thereby improving the imaging quality. The optical lens 100 can be used as an infrared optical lens, the optical lens 100 can image and obtain good imaging quality even in dim environments and other special application scenarios. In some embodiments, the filter IR may be made of glass. Of course, in some embodiments, the filter IR may be made of optical glass with a coating, or other materials, and the specific choice can be made according to actual needs, and no specific limitations are made in this embodiment.

In some embodiments, the optical lens 100 may further include a protective glass CG, the protective glass CG is arranged between the filter IR and the image plane IMG, so that it can be close to an imaging sensor during subsequent assembly and play a protective role.

In some embodiments, the optical lens 100 may satisfy the following conditional expression: 190deg<FOV<210deg,. Wherein, FOV is the maximum field of view angle of the optical lens 100. When the optical lens 100 satisfies the above conditional expression, it can have a wide field of view, thereby achieving wide-angle imaging. Further, the optical lens 100 may satisfy the following conditional expression: 192deg<FOV<206deg, so that the optical lens 100 can better achieve wide-angle imaging.

In some embodiments, the optical lens 100 may satisfy the following conditional expression: FNO<2.1. Wherein, FNO is an aperture number of the optical lens 100. In this way, the optical lens 100 has a large aperture characteristic, which can increase the light intake of the optical lens 100 and allow the optical lens 100 to be suitable for use at night or in low-light environment (such as rainy days), thereby meeting the imaging requirements in dark environments.

In some embodiments, the optical lens 100 may satisfy the following conditional expression: 95deg<FOV/FNO<101deg. By reasonably controlling a relationship between the field of view (FOV) and the aperture number (FNO) of the optical lens 100, a reasonable FOV and a reasonable FNO are provided for the optical lens 100, which can balance the design difficulty and the demand for the field of view, while allowing the aperture to change within a reasonable range, so that it provides a combination effect of a wide field of view and a large aperture, meeting the requirements of the optical lens 100 for a large aperture, high relative illumination, and low distortion.

In some embodiments, the optical lens 100 may satisfy the following conditional expression: 1.65<IMGH/F<1.8. Wherein, F is a focal length of the optical lens 100 and IMGH is half of an image height corresponding to the maximum field of view angle of the optical lens 100. When this conditional expression is satisfied, the optical lens 100 can meet the requirements of a large image plane and miniaturization, while also meeting the demand for large sensor format.

In some embodiments, the optical lens 100 may satisfy the following conditional expression: 7<TTL/IMGH<7.3. Wherein, TTL is a distance from the object side surface S1 of the first lens L1 to the image plane of the optical lens 100 along the optical axis. When the optical lens 100 satisfies this conditional expression, it can achieve a large image sensor while maintaining a compact design, thereby improving the imaging sharpness of the optical lens 100 and enhancing the imaging quality of the optical lens 100.

In some embodiments, the optical lens 100 may satisfy the following conditional expression: 12<TTL/F<13. Wherein, TTL is the distance from the object side surface S1 of the first lens L1 to the image plane of the optical lens 100 along the optical axis, and F is the focal length of the optical lens 100. When the optical lens 100 satisfies this conditional expression, it can achieve miniaturization while also having a wide-angle characteristic.

In some embodiments, the optical lens 100 may satisfy the following conditional expression: CT45/CT34>2. Wherein, CT45 is a distance along the optical axis from the imaging side surface of the fourth lens L4 to the object side surface of the fifth lens L5, and CT34 is a distance along the optical axis from the imaging side surface of the third lens L3 to the object side surface of the fourth lens L4. When the above conditional expression is satisfied, a distance between the fourth lens L4 and the fifth lens L5 and a distance between the third lens L3 and the fourth lens L4 can be reasonably controlled, which results in a suitable arrangement of the third lens L3, the fourth lens L4, and the fifth lens L5, and is beneficial for the miniaturization design of the optical lens 100. Especially when the aperture is located between the fourth lens and the fifth lens, the reasonable distance may further allow the light to enter the fourth lens L4 and the fifth lens L5 gently from the third lens L3, thereby correcting the distortion of the optical lens 100 and reducing the aberration generated by the optical lens 100, so that the imaging quality may be improved. Further, the optical lens 100 may satisfy the following conditional expression: 3<CT45/CT34<13.

In some embodiments, the optical lens 100 may satisfy the following conditional expression: -6<F1/F<-4. Wherein, F1 is a focal length of the first lens L1. When this conditional expression is satisfied, the focal length of the first lens L1 can be reasonably allocated, allowing the first lens L1 to provide a negative refractive power and have a reasonable refractive power distribution, which is beneficial for light convergence and helps to reduce the overall spherical aberration, chromatic aberration, and distortion of the first lens L1 to acceptable levels, reducing the design difficulty of the subsequent lenses, as well as improving the overall resolution of the optical lens 100 and enhancing a peripheral aberration correction of the optical lens 100. In addition, it is also beneficial for the size reduction of the first lens L1, thereby contributing to the formation of a small-sized optical lens 100.

In some embodiments, the optical lens 100 may satisfy the following conditional expression: -4<F2/F<-2. Wherein, F2 is a focal length of the second lens L2. By controlling a ratio of the focal length of the second lens L2 to the focal length of the optical lens 100, the focal length of the second lens L2 can be reasonably allocated, thereby reducing angle of the light incident from the first lens L1, and at the same time, helping to improve the overall resolution of the optical lens 100 and enhance the peripheral aberration correction of the optical lens 100.

In some embodiments, the optical lens 100 may satisfy the following conditional expression: |F3/F|>30. Wherein, F3 is a focal length of the third lens L3. When this conditional expression is satisfied, the focal length of the third lens L3 can be reasonably allocated, thereby enabling the third lens L3 to provide positive refractive power to the optical lens 100, which allows to provide better light convergence ability to the optical lens 100, and at the same time, allows to correct the distortion of the optical lens 100 and reduce the aberration generated by the optical lens 100, so that the imaging quality of the optical lens 100 may be improved.

In some embodiments, the optical lens 100 may satisfy the following conditional expression: $3<F4/F<8$. Wherein, F4 is a focal length of the fourth lens L4. When this conditional expression is satisfied, the focal length of the fourth lens L4 can be reasonably allocated, thereby enabling the fourth lens L4 to provide positive refractive power to the optical lens 100, which allows to provide better light convergence ability to the optical lens 100, and at the same time, allows to correct the distortion of the optical lens 100 and reduce the aberration generated by the optical lens 100, so that the imaging quality of the optical lens 100 may be improved.

In some embodiments, the optical lens 100 may satisfy the following conditional expression: $1<F5/F<3$. Wherein, F5 is a focal length of the fifth lens L5. When this conditional expression is satisfied, the refractive power of the fifth lens L5 can be reasonably allocated, thereby allowing to provide better light convergence ability to the optical lens 100, and at the same time, allowing to correct the distortion of the optical lens 100 and reduce the aberration generated by the optical lens 100, which improves the imaging quality of the optical lens 100.

In some embodiments, the optical lens 100 may satisfy the following conditional expression: $F6/F<-1.5$. Wherein, F6 is a focal length of the sixth lens L6. When this conditional expression is satisfied, the focal length of the sixth lens L6 can be reasonably allocated, and the refractive power of the fifth lens can be reasonably allocated, thereby allowing to correct the distortion of the optical lens 100 and reduce the aberration generated by the optical lens 100, which improves the imaging quality of the optical lens 100.

In some embodiments, the optical lens 100 may satisfy the following conditional expression: $3<F7/F<5$. Wherein, F7 is a focal length of the seventh lens L7. Since the seventh lens L7 provides positive refractive power to the optical lens 100 and is the main light convergence lens of the optical lens 100, by controlling a ratio of the focal length of the seventh lens L7 to the focal length of the optical lens 100, it is beneficial for the reasonable allocation of the positive optical power of the optical lens 100 and shortening the optical total length of the optical lens 100. When exceeding the upper limit of the above conditional expression, the focal length of the seventh lens L7 becomes larger, and the light deflection is greater, which is prone to increasing the aberration in the off-axis field of view. When below the lower limit of the above conditional expression, the focal length of the optical lens 100 becomes too large, and a total length of the optical lens 100 becomes too long, which is not conducive to the miniaturization design of the optical lens 100. Further, the optical lens 100 may satisfy the following conditional expression: $4<F7/F<20$, so that the focal length of the seventh lens L7 is reasonable, which is conducive to the miniaturization design of the optical lens 100.

In some embodiments, the optical lens 100 may satisfy the following conditional expression: $1<F1/F2<3$, which can reasonably control the focal lengths of the first lens L1 and the second lens L2, thereby allowing the refractive powers of the first lens L1 and the second lens L2 to be reasonable, which facilitates the light to enter the second lens L2 from the first lens L1 more gently, so that the distortion of the optical lens 100 may be corrected, the aberration generated by the optical lens 100 may be reduced, and the imaging quality may be improved.

In some embodiments, the optical lens 100 may satisfy the following conditional expression: $1.5<SD1/SD3<2.1$. Wherein, SD1 is the maximum effective semi-aperture of the object side surface S1 of the first lens L1, and SD3 is the maximum effective semi-aperture of the object side surface S3 of the second lens L2. When the optical lens 100 satisfies this conditional expression, it may reasonably control a ratio of the maximum effective semi-aperture of the object side surface S1 of the first lens L1 to the maximum effective semi-aperture of the object side surface S3 of the second lens L2, so that the transition between the object side surfaces of the first lens L1 and the second lens L2 is gentle, which facilitates the light to enter the second lens L2 from the first lens L1, and thus facilitating the control of the light path.

In some embodiments, the optical lens 100 may satisfy the following conditional expression: $1.1<SD3/IMGH<1.4$. When this conditional expression is satisfied, it may allow the maximum effective semi-aperture of the object side surface S3 of the second lens L2 to roughly match the image plane of the optical lens, and help to allow more light to enter the image plane of the optical lens, thereby achieving large image surface imaging.

In some embodiments, the optical lens 100 may satisfy the following conditional expression: $0.9<SD8/SD9<1.2$. Wherein, SD8 is the maximum effective semi-aperture of the imaging side surface S8 of the fourth lens L4, and SD9 is the maximum effective semi-aperture of the object side surface S10 of the fifth lens L5. When this conditional expression is satisfied, it can control the maximum effective semi-apertures of the imaging side surface S8 of the fourth lens L4 and the object side surface S10 of the fifth lens L5, allowing the transition between the fourth lens L4 and the fifth lens L5 to be gentle, reducing a step difference between the fourth lens L4 and the fifth lens L5, and thus facilitating the light to enter the fifth lens L5 gently, which is conducive to lowering the incident angle of the light after passing through the aperture, so that more light is allowed to enter the image side of the optical lens, and the illuminance of the optical lens is improved.

In some embodiments, the optical lens 100 may satisfy the following conditional expression: $-3<R10/SD10<-1$. Wherein, R10 is a radius of curvature at the imaging side surface S10 of the fifth lens L5 at the optical axis, and SD10 is the maximum effective semi-aperture of the imaging side surface S10 of the fifth lens L5. When this conditional expression is satisfied, it may reasonably control a shape of the imaging side surface S10 of the fifth lens L5, thereby preventing the fifth lens L5 from being too curved, which is conducive to the processing of the fifth lens L5.

In some embodiments, the optical lens 100 may satisfy the following conditional expression: - 5<CT3/SAGS5<-2. Wherein, SAGS5 is a distance along the optical axis from the maximum effective semi-aperture of the object side surface S5 of the third lens L3 to an intersection point of the object side surface S1 of the first lens L1 and the optical axis (i.e., a vector height of the object side surface S5 of the third lens L3), and CT3 is a thickness of the third lens L3 at the optical axis. When this conditional expression is satisfied, it can reasonably control the shape and thickness of the third lens L3, thereby controlling the overall thickness of the third lens L3 at the optical axis, so that the third lens L3 may be thinner and lighter.

In some embodiments, the optical lens 100 may satisfy the following conditional expression: - 10<F1/CT1<-5. Wherein, CT1 is a thickness of the first lens L1 at the optical axis. When this conditional expression is satisfied, the refractive power and thickness of the first lens L1 can be reasonably arranged, which can effectively control the incident angle of light in the optical lens 100, reduce the sensitivity of the optical lens 100, and be conducive to correcting the aberration generated by the optical lens 100, so that it is beneficial to improving the imaging quality of the optical lens 100.

In some embodiments, the optical lens 100 may satisfy the following conditional expression: - 8<F2/CT2<-4. Wherein, CT2 is a thickness of the second lens L2 at the optical axis. When this conditional expression is satisfied, the refractive power and thickness of the second lens L2 can be reasonably arranged, which can effectively control the incident angle of light in the optical lens 100, reduce the sensitivity of the optical lens 100, and be conducive to correcting the aberration generated by the optical lens 100, so that it is be beneficial to improving the imaging quality of the optical lens 100.

In some embodiments, the optical lens 100 may satisfy the following conditional expression: |F3/CT3|>20. Wherein, CT3 is the thickness of the third lens L3 at the optical axis. When this conditional expression is satisfied, the refractive power and thickness of the third lens L3 can be reasonably arranged, which allow the light to enter the optical lens 100 more gently, reduce the sensitivity of the optical lens 100, and be conducive to correcting the aberration generated by the optical lens 100, so that it is be beneficial to improving the imaging quality of the optical lens 100.

In some embodiments, the optical lens 100 may satisfy the following conditional expression: 2<F4/CT4<6. Wherein CT4 is a thickness of the fourth lens L4 at the optical axis. When this conditional expression is satisfied, the refractive power and thickness of the fourth lens L4 can be reasonably arranged, thereby allowing the light to enter the optical lens 100 more gently, reducing the sensitivity of the optical lens 100, and facilitating the correction of aberrations produced by the optical lens 100, which in turn helps to improve the imaging quality of the optical lens 100.

In some embodiments, the optical lens 100 may satisfy the following conditional expression: 1<F5/CT5<3. Wherein CT5 is a thickness of the fifth lens L5 at the optical axis. When this conditional expression is satisfied, the refractive power and thickness of the fifth lens L5 can be reasonably arranged, thereby allowing the light to enter the optical lens 100 more gently, reducing the sensitivity of the optical lens 100, and facilitating the correction of aberrations produced by the optical lens 100, which in turn helps to improve the imaging quality of the optical lens 100.

In some embodiments, the optical lens 100 may satisfy the following conditional expression: F6/CT6<-5. Wherein CT6 is a thickness of the sixth lens L6 at the optical axis. When this conditional expression is satisfied, the refractive power and thickness of the sixth lens L6 can be reasonably arranged, thereby allowing the light to enter the optical lens 100 more gently, reducing the sensitivity of the optical lens 100, and facilitating the correction of aberrations produced by the optical lens 100, which in turn helps to improve the imaging quality of the optical lens 100.

In some embodiments, the optical lens 100 may satisfy the following conditional expression: F7/CT7<5. Wherein CT7 is a thickness of the seventh lens L7 at the optical axis. When this conditional expression is satisfied, the refractive power and thickness of the seventh lens L7 can be reasonably arranged, thereby allowing the light to enter the optical lens 100 more gently, reducing the sensitivity of the optical lens 100, and facilitating the correction of aberrations produced by the optical lens 100, which in turn helps to improve the imaging quality of the optical lens 100.

In some embodiments, the optical lens 100 may satisfy the following conditional expressions: 1.2<CT5/ET5<2.1 and 1.2<CT7/ET7<1.5. Wherein CT5 is the thickness of the fifth lens L5 at the optical axis, and ET5 is a distance in a direction parallel to the optical axis from the maximum effective aperture of the object side surface of the fifth lens L5 to the maximum effective aperture of the imaging side surface of the fifth lens L5. CT7 is the thickness of the seventh lens L7 at the optical axis, and ET7 is a distance in the direction parallel to the optical axis from the maximum effective aperture of the object side surface of the seventh lens L7 to the maximum effective aperture of the imaging side surface of the seventh lens L7. When these conditional expressions are satisfied, a ratio of the thickness to the diameter of the corresponding lens can be reasonably controlled, thereby optimizing the surface shapes of the lenses, facilitating the effective convergence of light at large angles of incidence, and reducing the deflection angle of the light after passing through the corresponding lens, which in turn helps to reduce the generation of stray light and ensures good imaging performance.

In some embodiments, the optical lens 100 may satisfy the following conditional expressions: 0.8<CT1/ET1<0.95, 0.4<CT2/ET2<0.7, 0.9<CT3/ET3<1, 1.1<CT4/ET4<1.3, and 0.55<CT6/ET6<0.75. Wherein, CT2 is the thickness of the second lens L2 at the optical axis, ET2 is a distance in the direction parallel to the optical axis from the maximum effective aperture of the object side surface of the second lens L2 to the maximum effective aperture of the imaging side surface of the second lens L2, CT3 is the thickness of the third lens at the optical axis, ET3 is the distance from the maximum effective aperture on the object side surface of the third lens L3 to the maximum effective aperture on the imaging side surface of the third lens L3 along the optical axis, CT4 is the thickness of the fourth lens L4 on the optical axis, and ET4 is a distance in the direction parallel to the optical axis from the maximum effective aperture of the object side surface of the fourth lens L4 to the maximum effective aperture of the imaging side surface of the fourth lens L4, ET6 is a distance in the direction parallel to the optical axis from the maximum effective aperture of the object side surface of the sixth lens L6 to the maximum effective aperture of the imaging side surface of the sixth lens L6, ET1 is a distance in the direction parallel to the optical axis from the maximum effective aperture of the object side surface S1 of the first lens to the maximum effective aperture of the imaging side surface S2 of the first lens. When the above conditional expressions are satisfied, the surface shape of each lens can be optimized, thereby reducing the generation of stray light and achieving good imaging quality.

In some embodiments, the optical lens 100 may satisfy the following conditional expression: $0.9<(CT1+CT2)/CT12<1.3$. Wherein, CT12 is a distance from the imaging side surface of the first lens L1 to the object side surface of the second lens L2 along the optical axis. When this conditional expression is satisfied, a ratio of a sum of the thicknesses of the first lens L1 and the second lens L2 along the optical axis to the distance between the first lens L1 and the second lens L2 along the optical axis can be reasonably arranged, allowing the assembly of the first lens L1 and the second lens L2 to be more compact, which is conducive to the miniaturization design of the optical lens 100.

In some embodiments, the optical lens 100 may satisfy the following conditional expression s: $R1/R2<3$, $2<R3/R4<6$, $|R7/R8|<1$, and $|R13/R14|<1$. Wherein, R1 is a radius of curvature of the object side surface of the first lens L1 at the optical axis, R2 is a radius of curvature of the imaging side surface of the first lens L1 at the optical axis, R3 is a radius of curvature of the object side surface of the second lens L2 at the optical axis, R4 is a radius of curvature of the imaging side surface of the second lens L2 at the optical axis, R7 is a radius of curvature of the object side surface of the fourth lens L4 at the optical axis, R8 is a radius of curvature of the imaging side surface of the fourth lens L4 at the optical axis, R13 is a radius of curvature of the object side surface of the seventh lens L7 at the optical axis, and R14 is a radius of curvature of the imaging side surface of the seventh lens L7 at the optical axis. When these conditional expressions are satisfied, it is beneficial to control the radii of curvature of the object side surface and imaging side surface of each lens, so that the surface shapes of the object side surface and the imaging side surface of each lens are not overly curved, thereby facilitating the control of the shape of each lens, and at the same time, it can correct the aberration generated by itself and improve the imaging quality.

In some embodiments, the optical lens 100 may satisfy the following conditional expression: $1.2<R6/R5<1.4$. Wherein R5 is a radius of curvature of the object side surface of the third lens L3 at the optical axis, and R6 is a radius of curvature of the imaging side surface of the third lens L3 at the optical axis. By reasonably controlling the radii of curvature at the object side surface and the imaging side surface of the third lens L3 at the optical axis, the incident light refracted by the first lens L1 and the second lens L2 can be effectively collected and compressed, allowing the light to gently transition to the subsequent lenses, reducing aberration, and improving the imaging quality of the optical lens.

In some embodiments, the optical lens 100 may satisfy the following conditional expression: $-2<R9/R10<-1$. Wherein R9 is a radius of curvature of the object side surface of the fifth lens L5 at the optical axis, and R10 is a radius of curvature of the imaging side surface of the fifth lens L5 at the optical axis. By reasonably matching a ratio of the radii of curvature of the object side surface and the imaging side surface of the fifth lens L5 at the optical axis, the surface shape difference between the object side surface and the imaging side surface of the fifth lens L5 can be reasonable, which is conducive to controlling the shape of the fifth lens L5 and thereby correcting the aberration generated by itself to improve the imaging quality.

In some embodiments, the optical lens 100 may satisfy the following conditional expression: $R11/R12<0.5$. Wherein R11 is a radius of curvature of the object side surface of the sixth lens L6 at the optical axis, and R12 is a radius of curvature of the imaging side surface of the sixth lens L6 at the optical axis. By reasonably matching a ratio of the radii of curvature of the object side surface and the imaging side surface of the sixth lens L6 at the optical axis, the surface shape difference between the object side surface and the imaging side surface of the sixth lens L6 can be reasonable, which is conducive to controlling the shape of the sixth lens L6 and thereby correcting the aberration generated by itself to improve the imaging quality.

In some embodiments, the optical lens 100 may satisfy the following conditional expression: $0.52<DOS/TTL<0.65$. Wherein, DOS is a distance from the object side surface of the first lens L1 to the aperture STO along the optical axis. When the optical lens 100 satisfies the above conditional expression, a position of the aperture may be reasonably controlled, which not only facilitates the miniaturization design of the optical lens but also controls the amount of light passing through the aperture, thereby facilitating the adjustment of the brightness and contrast of the optical lens.

In some embodiments, the optical lens 100 may satisfy the following conditional expression: $110deg<FOV*-F/IMGH<120deg$. By reasonably controlling a mutual relationship among a total effective focal length of the optical lens, the maximum field of view angle of the optical lens 100, and the image height corresponding to the maximum field of view angle of the optical lens 100, a large-angle resolution of the optical lens 100 may be achieved, which is helpful to meet the requirements of small distortion and large field of view angle of the optical lens 100 while improving the overall effect of the optical lens 100.

In some embodiments, the optical lens 100 may satisfy the following conditional expression: 3<CTMAX/CTMIN<4.2. Wherein CTMAX is the maximum thickness of a lens among the first lens to the seventh lens along the optical axis, and CTMIN is the minimum thickness of a lens among the first lens L1 to the seventh lens L7 along the optical axis. By controlling a ratio of the maximum thickness of the lens to the minimum thickness of the lens among the seven lenses, the thicknesses of each lens may be controlled, thereby facilitating the miniaturization design of the optical lens during assembly.

The optical lens 100 of the present disclosure will be described in detail below with reference to specific parameters.

Embodiment 1

FIG. 1 is a schematic structural diagram of the optical lens 100 of the Embodiment 1, the optical lens 100 sequentially includes a first lens L1, a second lens L2, a third lens L3, a fourth lens L4, an aperture STO, a fifth lens L5, a sixth lens L6, a seventh lens L7, a filter IR, and a protective glass CG along an optical axis from the object side to the image side.

In the illustrated embodiment, the first lens L1 has negative refractive power, the second lens L2 has negative refractive power, the third lens L3 has negative refractive power, the fourth lens L4 has positive refractive power, the fifth lens L5 has positive refractive power, the sixth lens L6 has negative refractive power, and the seventh lens L7 has positive refractive power.

In the illustrated embodiment, an object side surface of the first lens L1 is convex near the optical axis, and an imaging side surface of the first lens L1 is concave near the optical axis; an object side surface of the second lens L2 is convex near the optical axis, and an imaging side surface of the second lens L2 is concave near the optical axis; an object side surface of the third lens L3 is concave near the optical axis, and an imaging side surface of the third lens L3 is convex near the optical axis; an object side surface and an imaging side surface of the fourth lens L4 are both convex near the optical axis; an object side surface and an imaging side surface of the fifth lens L5 are both convex near the optical axis; an object side surface of the sixth lens L6 is concave near the optical axis, and an imaging side surface of the sixth lens L6 is convex near the optical axis; an object side surface and an imaging side surface of the seventh lens L7 are both convex near the optical axis.

Taking a focal length F=1.6085mm, an aperture number FNO=2.05, and the maximum field of view angle FOV=200deg of the optical lens 100 as examples, other parameters of the optical lens 100 are given in Table 1. The components along the optical axis of the optical lens 100 from the object side to the image side are arranged in the order from top to bottom in Table 1. In the same lens, a surface with a smaller surface number is the object side surface of the lens, and a surface with a larger surface number is the imaging side surface of the lens. For example, surface numbers 1 and 2 correspond to the object side surface S1 and imaging side surface S2 of the first lens L1, respectively. The Y radius in Table 1 is the radius of curvature of the object side surface or the imaging side surface with the corresponding surface number at the optical axis. The first value in the "thickness" parameter column of the lens is the thickness of the lens at the optical axis, and the second value is a distance from the imaging side surface of the lens to a rear surface in an imaging side direction on the optical axis. The value of the aperture STO in the "Thickness" parameter column is a distance from the aperture STO to a vertex of a latter surface in an imaging side direction (the vertex refers to an intersection of the latter surface and the optical axis) on the optical axis. By default, a direction from the object side surface of the first lens L1 to the imaging side surface of the last lens is a positive direction of the optical axis. When the value of the aperture STO in the "Thickness" parameter column is negative, it indicates that the aperture STO is arranged on the image side of the vertex of the latter surface. When the value of the aperture STO in the "Thickness" parameter column is a positive value, the aperture STO is arranged on the object side of the vertex of the latter surface. It can be understood that the units of the Y radius, thickness, and focal length in Table 1 are all mm. Moreover, the refractive index, Abbe number, etc. in Table 1 are obtained at the reference wavelength of 587.6nm, and the focal length is obtained at the reference wavelength of 546nm.

In the illustrated embodiment, both the object side surface and the imaging side surface of the seventh lens L7 are aspheric surfaces. The surface shape x of each aspheric lens can be defined by, but not limited to, the following aspheric formula:

$$x = \frac{ch^2}{1+\sqrt{1-(K+1)c^2h^2}} + \sum Aih^i$$

;

Wherein, x is a height distance along the optical axis from a position of the aspheric surface at height h to the vertex of the aspheric surface; c is a curvature of the vertex of the aspheric surface, and c=1/Y (that is, the curvature of the vertex of the aspheric surface c is the reciprocal of the Y radius in the above Table 1); K is the cone coefficient; Ai is the coefficient corresponding to the i-th higher-order term of the aspheric surface. Table 2 shows the higher-order term coefficients A4, A6, A8, A10, A12, A14, and A16 of the aspheric surface of the seventh lens L7.

Table 1

| Embodiment 1 | | | | | | | | |
|---|---|---|---|---|---|---|---|---|
| F=1.6085mm, FNO=2.05, FOV=200deg | | | | | | | | |
| Surface number | Surface name | Surface type | Y radius | Thickness | Material | Refractive index | Abbe number | Focal length |
| OBJ | Object side | sphere | infinity | infinity | | | | |
| 1 | First lens | sphere | 11.600 | 1.400 | glass | 1.954 | 32.319 | -7.2972 |
| 2 | | sphere | 4.111 | 2.360 | | | | |
| 3 | Second lens | sphere | 12.215 | 0.800 | glass | 1.729 | 54.685 | -3.9341 |
| 4 | | sphere | 2.267 | 2.709 | | | | |
| 5 | Third lens | sphere | -3.033 | 1.521 | glass | 1.773 | 49.599 | -74.6562 |
| 6 | | sphere | -3.902 | 0.100 | | | | |
| 7 | Fourth lens | sphere | 4.969 | 2.091 | glass | 1.620 | 36.348 | 5.7760 |
| 8 | | sphere | -11.004 | 0.296 | | | | |
| STO | Aperture | sphere | infinity | 0.795 | | | | |
| 9 | Fifth lens | sphere | 4.179 | 2.467 | glass | 1.437 | 95.100 | 4.3824 |
| 11 | Sixth lens | sphere | -2.913 | 0.600 | glass | 1.946 | 17.942 | -3.1860 |
| 12 | | sphere | -69.907 | 0.174 | | | | |
| 13 | Seventh lens | asphere | 5.508 | 2.473 | glass | 1.620 | 63.764 | 4.8617 |
| 14 | | asphere | -5.557 | 0.500 | | | | |
| 15 | Filter | sphere | infinity | 0.400 | glass | 1.5233 | 54.5 | |
| 16 | | sphere | infinity | 1.425 | | | | |
| 17 | Protective glass | sphere | infinity | 0.400 | glass | 1.5233 | 54.5 | |
| 18 | | sphere | infinity | 0.125 | | | | |
| IMG | Image plane | sphere | infinity | 0.000 | | | | |

Table 2

| Embodiment 1 | | |
|---|---|---|
| Surface number | 13 | 14 |
| K | -9.86080E+00 | -1.52685E+01 |
| A4 | 2.55918E-03 | -6.34583E-03 |
| A6 | -6.07414E-04 | 1.70297E-03 |
| A8 | 3.47187E-04 | -2.36571E-04 |
| A10 | -7.42362E-05 | 6.39433E-05 |
| A12 | 9.37311E-06 | -1.21471E-05 |
| A14 | -5.99496E-07 | 1.35843E-06 |
| A16 | 1.45928E-08 | -5.48509E-08 |

Referring to (A) of FIG. 2, (A) of FIG. 2 is the spherical aberration diagram of the optical lens 100 in the Embodiment 1 at wavelengths of 656nm, 588nm, 546nm, 486nm, 436nm, and 410nn. The abscissa along the X-axis direction represents the deviation of the focus point in mm, and the ordinate along the Y-axis direction represents the normalized field of view. It can be seen from (A) of FIG. 2 that the spherical aberration value of the optical lens 100 in the Embodiment 1 is well, indicating that the imaging quality of the optical lens 100 in this embodiment is well.

Referring to (B) of FIG. 2, (B) of FIG. 2 is an astigmatism curve diagram of the optical lens 100 in the Embodiment 1 at a wavelength of 546nm. The abscissa along the X-axis direction represents the deviation of the focus point in mm, and the ordinate along the Y-axis represents the field of view angle with units of deg. T in the astigmatism curve diagram represents the curvature of the image plane IMG in the tangential direction, and S represents the curvature of the image plane IMG in the sagittal direction. It can be seen from (B) of FIG. 2 that at this wavelength, the field curvature of the optical lens 100 is small, the field curvature and astigmatism of each field of view have been well corrected, both the center and the edge of the field of view have clear imaging, indicating that the astigmatism of the optical lens 100 has been well compensated.

Referring to (C) of FIG. 2, (C) of FIG. 2 is a distortion diagram of the optical lens 100 in the Embodiment 1 at a wavelength of 546nm. The abscissa along the X-axis direction represents the distortion, and the ordinate along the Y-axis direction represents the field of view angle with the unit of deg. It can be seen from (C) of FIG. 2 that at this wavelength, the image distortion caused by the main beam is small, and the distortion of the optical lens 100 has been well corrected.

Embodiment 2

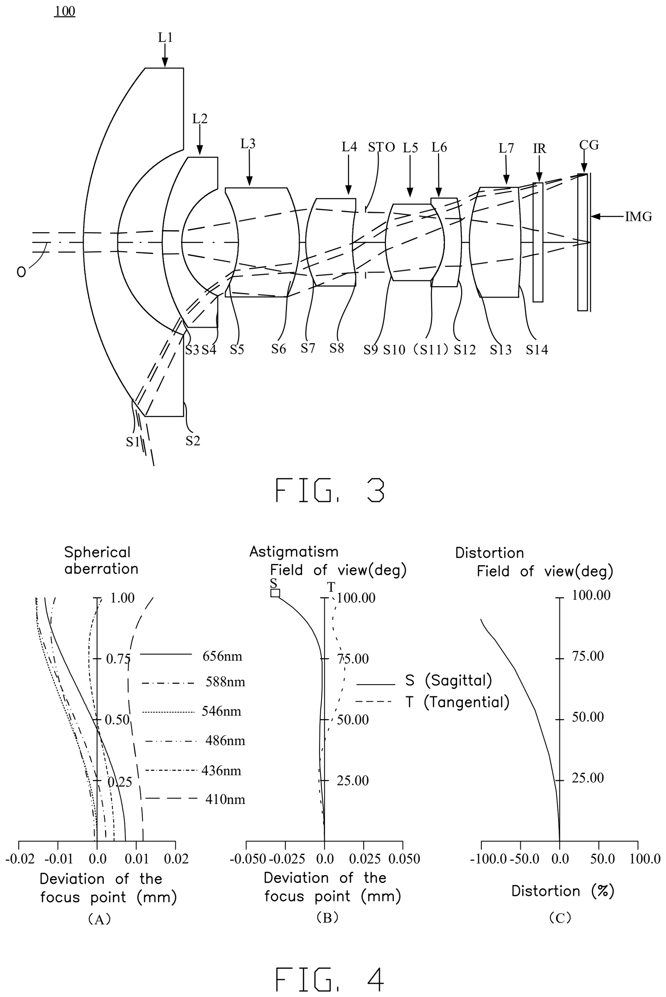

FIG. 3 is a schematic structural diagram of the optical lens 100 of the second embodiment, the optical lens 100 sequentially includes a first lens L1, a second lens L2, a third lens L3, a fourth lens L4, an aperture STO, a fifth lens L5, a sixth lens L6, a seventh lens L7, a filter IR, and a protective glass CG along an optical axis from an object side to an imaging side.

In the illustrated embodiment, except that the third lens L3 has positive refractive power, the refractive powers of the other lenses are the same as those in Embodiment 1.

In the illustrated embodiment, except that the imaging side surface of the fourth lens is concave near the optical axis, the shapes of the object side surfaces and imaging side surfaces of the other lenses are the same as those in Embodiment 1.

The other parameters of the optical lens 100 are given in Table 3. The definitions of each parameter can be obtained from the description of the previous embodiment, which will not be repeated here.

Table 3

| Embodiment 2 | | | | | | | | |
|---|---|---|---|---|---|---|---|---|
| F=1.6543mm, FNO=2.05, FOV=200deg | | | | | | | | |
| Surface number | Surface name | Surface type | Y radius | Thickness | Material | Refractive index | Abbe number | Focal length |
| OBJ | Object side | sphere | infinity | infinity | | | | |
| 1 | First lens | sphere | 11.662 | 1.400 | glass | 1.954 | 32.319 | -7.2581 |
| 2 | | sphere | 4.1072 | 1.827 | | | | |
| 3 | Second lens | sphere | 6.478 | 0.800 | glass | 1.883 | 40.807 | -4.7911 |
| 4 | | sphere | 2.419 | 2.314 | | | | |
| 5 | Third lens | sphere | -4.2821 | 2.500 | glass | 2.003 | 19.317 | 85.9612 |
| 6 | | sphere | -5.282 | 0.256 | | | | |
| 7 | Fourth lens | sphere | 3.989 | 1.908 | glass | 1.684 | 26.813 | 10.7762 |
| 8 | | sphere | 6.9194 | 0.541 | | | | |
| STO | Aperture | sphere | infinity | 0.816 | | | | |
| 9 | Fifth lens | sphere | 4.154 | 2.408 | glass | 1.571 | 71.616 | 3.1914 |
| 11 | Sixth lens | sphere | -2.5793 | 0.700 | glass | 1.946 | 17.942 | --3.9017 |
| 12 | | sphere | -9.4197 | 0.321 | | | | |

(continued)

| Embodiment 2 | | | | | | | | |
|---|---|---|---|---|---|---|---|---|
| F=1.6543mm, FNO=2.05, FOV=200deg | | | | | | | | |
| Surface number | Surface name | Surface type | Y radius | Thickness | Material | Refractive index | Abbe number | Focal length |
| 13 | Seventh lens | asphere | 5.4080 | 2.110 | glass | 1.619 | 63.855 | 7.0128 |
| 14 | | asphere | -19.0410 | 0.500 | | | | |
| 15 | Filter | sphere | infinity | 0.400 | glass | 1.5233 | 54.5 | |
| 16 | | sphere | infinity | 1.425 | | | | |
| 17 | Protective glass | sphere | infinity | 0.400 | glass | 1.5233 | 54.5 | |
| 18 | | sphere | infinity | 0.125 | | | | |
| IMG | Image plane | sphere | infinity | 0.000 | | | | |

In the Embodiment 2, Table 4 shows the higher-order term coefficients that can be used for each aspherical lens in the Embodiment 2. Wherein, each aspherical surface shape can be defined by the formula given in the Embodiment 1.

Table 4

| Embodiment 2 | | |
|---|---|---|
| Surface number | 13 | 14 |
| K | -4.81669E-01 | 5.26251E+00 |
| A4 | -2.84962E-03 | 6.56573E-04 |
| A6 | -5.26976E-04 | 1.44991E-05 |
| A8 | 3.27754E-04 | -6.53513E-05 |
| A10 | -7.23131E-05 | 5.49751E-05 |
| A12 | 9.37311E-06 | -1.21471E-05 |
| A14 | -5.99496E-07 | 1.35843E-06 |
| A16 | 1.45928E-08 | -5.48509E-08 |

Referring to FIG. 4, it can be seen from (A) a spherical aberration diagram, (B) an astigmatism curve diagram, and (C) a distortion diagram in FIG. 4 that, the spherical aberration value, astigmatism, and distortion of the optical lens 100 are well controlled, so that the optical lens 100 of this embodiment has a good imaging quality. In addition, regarding the wavelengths corresponding to the curves in (A) in Figure 4, (B) in Figure 4, and (C) in Figure 4, please refer to the contents described in (A) in Figure 2, (B) in Figure 2, and (C) in Figure 2 in the Embodiment 1 and will not be described again here.

Embodiment 3

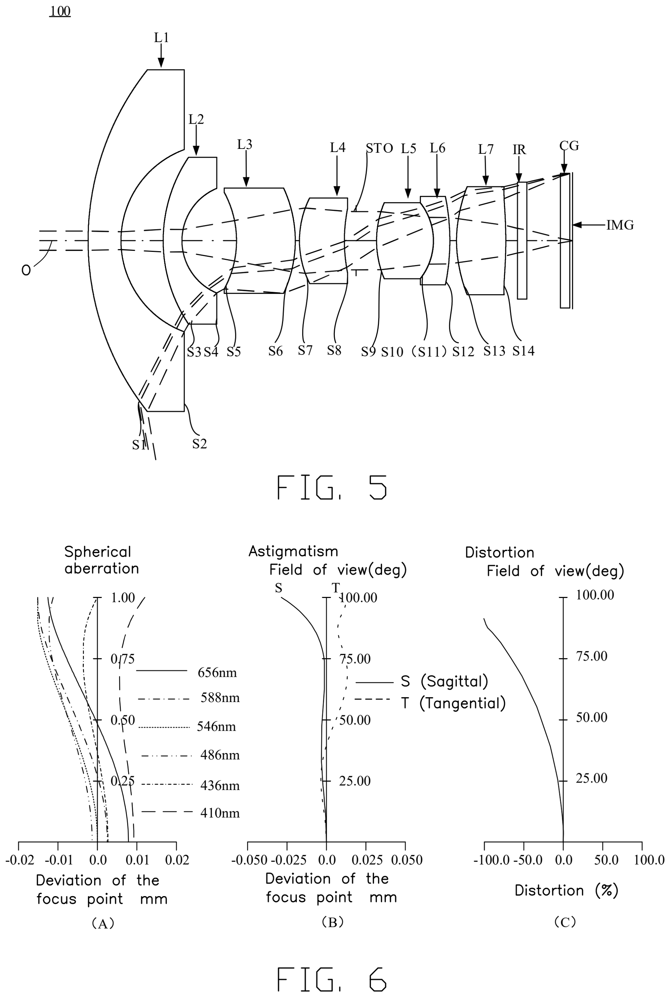

FIG. 5 is a schematic structural diagram of the optical lens 100 of the Embodiment 3, the optical lens 100 sequentially includes a first lens L1, a second lens L2, a third lens L3, a fourth lens L4, an aperture STO, a fifth lens L5, a sixth lens L6, a seventh lens L7, a filter IR, and a protective glass CG along an optical axis from an object side to an imaging side.

In the illustrated embodiment, except that the third lens L3 has positive refractive power, the refractive powers of the other lenses are the same as those in Embodiment 1.

In the illustrated embodiment, except that the imaging side surface of the fourth lens is concave near the optical axis, the shapes of the object side surfaces and imaging side surfaces of the other lenses are the same as those in Embodiment 1.

The other parameters of the optical lens 100 are given in Table 5. The definitions of each parameter can be obtained from the description of the previous embodiment, which will not be repeated here.

Table 5

| Surface number | Surface name | Surface type | Y radius | Thickness | Material | Refractive index | Abbe number | Focal length |
|---|---|---|---|---|---|---|---|---|
| Embodiment 3 | | | | | | | | |
| F=1.6553mm, FNO=2.05, FOV=200deg | | | | | | | | |
| OBJ | Object side | sphere | infinity | infinity | | | | |
| 1 | First lens | sphere | 11.628 | 1.400 | glass | 1.954 | 32.319 | -7.2792 |
| 2 | | sphere | 4.1094 | 1.797 | | | | |
| 3 | Second lens | sphere | 6.317 | 0.800 | glass | 1.883 | 40.807 | -4.8146 |
| 4 | | sphere | 2.398 | 2.323 | | | | |
| 5 | Third lens | sphere | -4.2597 | 2.500 | glass | 2.003 | 19.317 | 85.1495 |
| 6 | | sphere | -5.260 | 0.179 | | | | |
| 7 | Fourth lens | sphere | 4.002 | 1.912 | glass | 1.684 | 26.810 | 10.9112 |
| 8 | | sphere | 6.8706 | 0.499 | | | | |
| STO | Aperture | sphere | infinity | 0.872 | | | | |
| 9 | Fifth lens | sphere | 4.141 | 2.420 | glass | 1.571 | 71.620 | 3.1957 |
| 11 | Sixth lens | sphere | -2.5861 | 0.700 | glass | 1.946 | 17.942 | -3.9465 |
| 12 | | sphere | -9.2611 | 0.284 | | | | |
| 13 | Seventh lens | asphere | 5.3536 | 2.094 | glass | 1.619 | 63.855 | 7.0150 |
| 14 | | asphere | -19.9020 | 0.500 | | | | |
| 15 | Filter | sphere | infinity | 0.400 | glass | 1.5233 | 54.5 | |
| 16 | | sphere | infinity | 1.425 | | | | |
| 17 | Protective glass | sphere | infinity | 0.400 | glass | 1.5233 | 54.5 | |
| 18 | | sphere | infinity | 0.125 | | | | |
| IMG | Image plane | sphere | infinity | 0.000 | | | | |

In the Embodiment 3, Table 6 shows the higher-order term coefficients that can be used for each aspherical lens in the Embodiment 3. Wherein, each aspherical surface shape can be defined by the formula given in the Embodiment 1.

Table 6

| Surface number | 13 | 14 |
|---|---|---|
| Embodiment 3 | | |
| K | -3.81289E-01 | -1.88908E+00 |
| A4 | -2.73158E-03 | 7.98650E-04 |
| A6 | -5.38590E-04 | 1.69897E-05 |
| A8 | 3.34253E-04 | -6.39766E-05 |
| A10 | -7.28685E-05 | 5.55319E-05 |
| A12 | 9.37311E-06 | -1.21471E-05 |
| A14 | -5.99496E-07 | 1.35843E-06 |
| A16 | 1.45928E-08 | -5.48509E-08 |

Referring to FIG. 6, it can be seen from (A) a spherical aberration diagram, (B) an astigmatism curve diagram, and (C) a distortion diagram in FIG. 6 that, the spherical aberration value, astigmatism, and distortion of the optical lens 100 are well controlled, so that the optical lens 100 of this embodiment has a good imaging quality. In addition, regarding the wavelengths corresponding to the curves in (A) in Figure 6, (B) in Figure 6, and (C) in Figure 6, please refer to the contents described in (A) in Figure 2, (B) in Figure 2, and (C) in Figure 2 in the Embodiment 1 and will not be described again here.

Embodiment 4

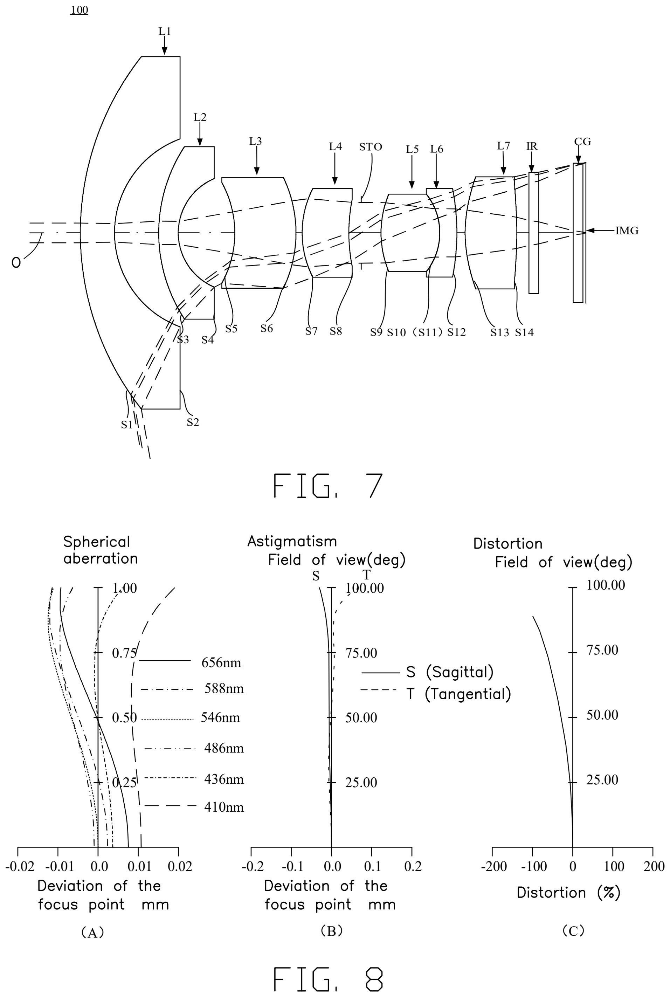

FIG. 7 is a schematic structural diagram of the optical lens 100 of the Embodiment 4, the optical lens 100 sequentially includes a first lens L1, a second lens L2, a third lens L3, a fourth lens L4, an aperture STO, a fifth lens L5, a sixth lens L6, a seventh lens L7, a filter IR, and a protective glass CG along an optical axis from an object side to an imaging side.

In the illustrated embodiment, except that the third lens L3 has positive refractive power, the refractive powers of the other lenses are the same as those in Embodiment 1.

In the illustrated embodiment, except that the imaging side surface of the fourth lens is concave near the optical axis, the shapes of the object side surfaces and imaging side surfaces of the other lenses are the same as those in Embodiment 1.

The other parameters of the optical lens 100 are given in Table 7. The definitions of each parameter can be obtained from the description of the previous embodiment, which will not be repeated here.

Table 7

| Embodiment 4 | | | | | | | | |
|---|---|---|---|---|---|---|---|---|
| F=1.6576mm, FNO=2.05, FOV=200deg | | | | | | | | |
| Surface number | Surface name | Surface type | Y radius | Thickness | Material | Refractive index | Abbe number | Focal length |
| OBJ | Object side | sphere | infinity | infinity | | | | |
| 1 | First lens | sphere | 11.713 | 1.400 | glass | 1.954 | 32.319 | -7.2556 |
| 2 | | sphere | 4.1140 | 1.809 | | | | |
| 3 | Second lens | sphere | 6.461 | 0.800 | glass | 1.883 | 40.807 | -4.8069 |
| 4 | | sphere | 2.421 | 2.314 | | | | |
| 5 | Third lens | sphere | -4.2797 | 2.505 | glass | 2.003 | 19.317 | 83.8516 |
| 6 | | sphere | -5.276 | 0.254 | | | | |
| 7 | Fourth lens | sphere | 4.005 | 1.912 | glass | 1.684 | 26.810 | 10.8033 |
| 8 | | sphere | 6.9644 | 0.504 | | | | |
| STO | Aperture | sphere | infinity | 0.815 | | | | |
| 9 | Fifth lens | sphere | 4.155 | 2.404 | glass | 1.571 | 71.620 | 3.1937 |
| 11 | Sixth lens | sphere | -2.5836 | 0.700 | glass | 1.946 | 17.942 | -3.9150 |
| 12 | | sphere | -9.3973 | 0.338 | | | | |
| 13 | Seventh lens | asphere | 5.4182 | 2.113 | glass | 1.619 | 63.855 | 7.0287 |
| 14 | | asphere | -19.1173 | 0.500 | | | | |
| 15 | Filter | sphere | infinity | 0.400 | glass | 1.5233 | 54.5 | |
| 16 | | sphere | infinity | 1.414 | | | | |
| 17 | Protective glass | sphere | infinity | 0.400 | glass | 1.5233 | 54.5 | |
| 18 | | sphere | infinity | 0.122 | | | | |
| IMG | Image plane | sphere | infinity | 0.000 | | | | |

In the Embodiment 4, Table 8 shows the higher-order term coefficients that can be used for each aspherical lens in the Embodiment 4. Wherein, each aspherical surface shape can be defined by the formula given in the Embodiment 1.

Table 8

| Embodiment 4 | | |
|---|---|---|
| Surface number | 13 | 14 |
| K | -5.06299E-01 | 8.44731E+00 |
| A4 | -2.84198E-03 | 6.25041E-04 |
| A6 | -5.39181E-04 | 2.43002E-05 |
| A8 | 3.23134E-04 | -6.56149E-05 |
| A10 | -7.39393E-05 | 5.41780E-05 |
| A12 | 9.56558E-06 | -1.23244E-05 |
| A14 | -5.87863E-07 | 1.35466E-06 |
| A16 | 1.35278E-08 | -5.11214E-08 |

Referring to FIG. 8, it can be seen from (A) a spherical aberration diagram, (B) an astigmatism curve diagram, and (C) a distortion diagram in FIG. 8 that, the spherical aberration value, astigmatism, and distortion of the optical lens 100 are well controlled, so that the optical lens 100 of this embodiment has a good imaging quality. In addition, regarding the wavelengths corresponding to the curves in (A) in Figure 8, (B) in Figure 8, and (C) in Figure 8, please refer to the contents described in (A) in Figure 2, (B) in Figure 2, and (C) in Figure 2 in the Embodiment 1 and will not be described again here.

Embodiment 5

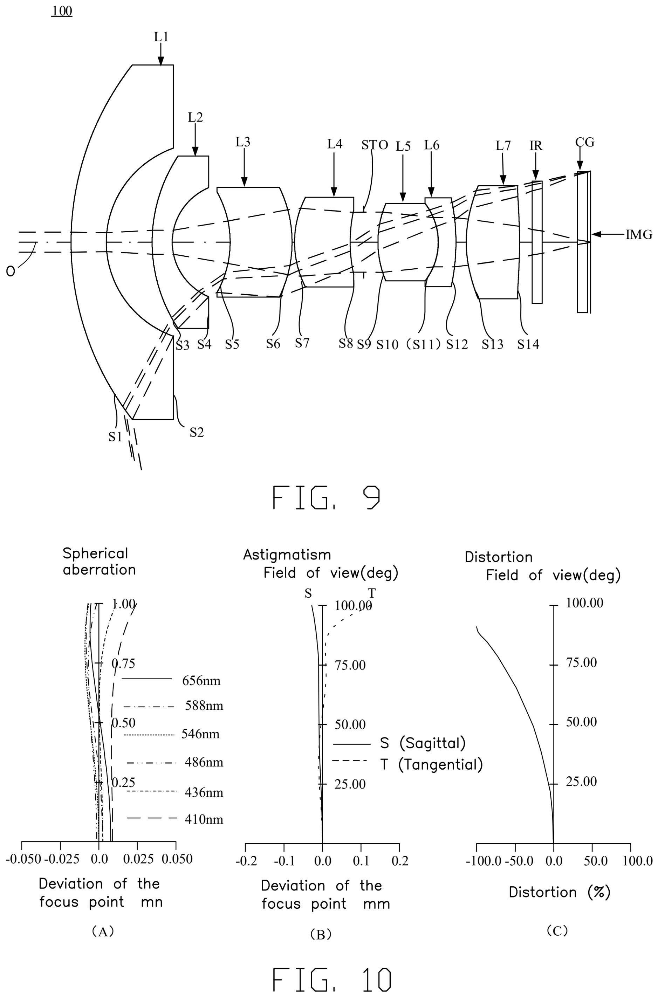

FIG. 9 is a schematic structural diagram of the optical lens 100 of the Embodiment 5, the optical lens 100 sequentially includes a first lens L1, a second lens L2, a third lens L3, a fourth lens L4, an aperture STO, a fifth lens L5, a sixth lens L6, a seventh lens L7, a filter IR, and a protective glass CG along an optical axis from an object side to an imaging side.

In the illustrated embodiment, except that the third lens L3 has positive refractive power, the refractive powers of the other lenses are the same as those in Embodiment 1.

In the illustrated embodiment, except that the imaging side surface of the fourth lens is concave near the optical axis, the shapes of the object side surfaces and imaging side surfaces of the other lenses are the same as those in Embodiment 1.

The other parameters of the optical lens 100 are given in Table 9. The definitions of each parameter can be obtained from the description of the previous embodiment, which will not be repeated here.

Table 9

| Embodiment 5 | | | | | | | | |
|---|---|---|---|---|---|---|---|---|
| F=1.6575mm, FNO=2.035, FOV=200deg | | | | | | | | |
| Surface number | Surface name | Surface type | Y radius | Thickness | Material | Refractive index | Abbe number | Focal length |
| OBJ | Object side | sphere | infinity | infinity | | | | |
| 1 | First lens | sphere | 11.847 | 1.400 | glass | 1.954 | 32.319 | -7.0627 |
| 2 | | sphere | 4.0645 | 1.819 | | | | |
| 3 | Second lens | sphere | 6.448 | 0.800 | glass | 1.850 | 42.696 | -4.9767 |
| 4 | | sphere | 2.417 | 2.299 | | | | |
| 5 | Third lens | sphere | -4.2504 | 2.458 | glass | 2.003 | 19.317 | 65.6228 |
| 6 | | sphere | -5.159 | 0.100 | | | | |
| 7 | Fourth lens | sphere | 4.059 | 2.207 | glass | 1.684 | 26.810 | 12.1307 |
| 8 | | sphere | 6.1274 | 0.539 | | | | |
| STO | Aperture | sphere | infinity | 0.564 | | | | |

(continued)

| Surface number | Surface name | Surface type | Y radius | Thickness | Material | Refractive index | Abbe number | Focal length |
|---|---|---|---|---|---|---|---|---|
| Embodiment 5 |
| F=1.6575mm, FNO=2.035, FOV=200deg |
| 9 | Fifth lens | sphere | 4.083 | 2.397 | glass | 1.571 | 71.620 | 3.2007 |
| 11 | Sixth lens | sphere | -2.6200 | 0.700 | glass | 1.946 | 17.942 | -4.1345 |
| 12 | | sphere | -8.7452 | 0.408 | | | | |
| 13 | Seventh lens | asphere | 5.0230 | 2.118 | glass | 1.619 | 63.855 | 6.7340 |
| 14 | | asphere | -20.9626 | 0.500 | | | | |
| 15 | Filter | sphere | infinity | 0.400 | glass | 1.5233 | 54.5 | |
| 16 | | sphere | infinity | 1.399 | | | | |
| 17 | Protective glass | sphere | infinity | 0.400 | glass | 1.5233 | 54.5 | |
| 18 | | sphere | infinity | 0.122 | | | | |
| IMG | Image plane | sphere | infinity | 0.000 | | | | |

In the Embodiment 5, Table 10 shows the higher-order term coefficients that can be used for each aspherical lens in the Embodiment 5. Wherein, each aspherical surface shape can be defined by the formula given in the Embodiment 1.

Table 10

| Embodiment 5 | | |
|---|---|---|
| Surface number | 13 | 14 |
| K | -4.20946E-01 | -1.00563E+01 |
| A4 | -2.56136E-03 | 7.52555E-04 |
| A6 | -5.67475E-04 | 8.71352E-05 |
| A8 | 3.23413E-04 | -6.88566E-05 |
| A10 | -7.49336E-05 | 5.06642E-05 |
| A12 | 9.18082E-06 | -1.21557E-05 |
| A14 | -6.10855E-07 | 1.34352E-06 |
| A16 | 3.46862E-08 | -4.46110E-08 |

Referring to FIG. 10, it can be seen from (A) a spherical aberration diagram, (B) an astigmatism curve diagram, and (C) a distortion diagram in FIG. 10 that, the spherical aberration value, astigmatism, and distortion of the optical lens 100 are well controlled, so that the optical lens 100 of this embodiment has a good imaging quality. In addition, regarding the wavelengths corresponding to the curves in (A) in Figure 10, (B) in Figure 10, and (C) in Figure 10, please refer to the contents described in (A) in Figure 2, (B) in Figure 2, and (C) in Figure 2 in the Embodiment 1 and will not be described again here.

Embodiment 6

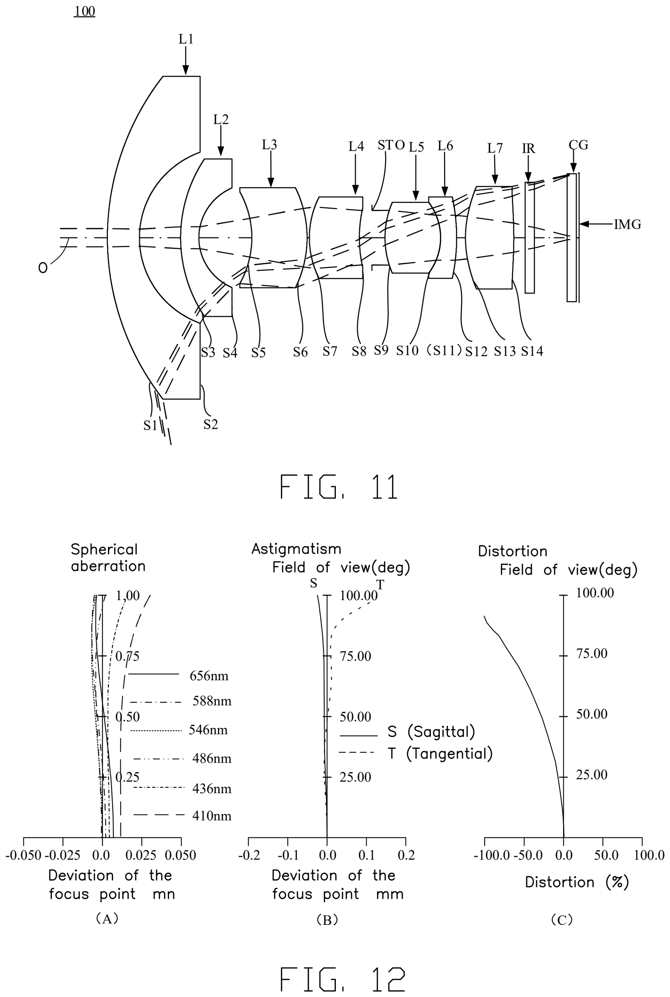

FIG. 11 is a schematic structural diagram of the optical lens 100 of the Embodiment 6, the optical lens 100 sequentially includes a first lens L1, a second lens L2, a third lens L3, a fourth lens L4, an aperture STO, a fifth lens L5, a sixth lens L6, a seventh lens L7, a filter IR, and a protective glass CG along an optical axis from an object side to an imaging side.

In the illustrated embodiment, except that the third lens L3 has positive refractive power, the refractive powers of the other lenses are the same as those in Embodiment 1.

In the illustrated embodiment, except that the imaging side surface of the fourth lens is concave near the optical axis, the shapes of the object side surfaces and imaging side surfaces of the other lenses are the same as those in Embodiment 1.

The other parameters of the optical lens 100 are given in Table 11. The definitions of each parameter can be obtained from the description of the previous embodiment, which will not be repeated here.

Table 11

| Surface number | Surface name | Surface type | Y radius | Thickness | Material | Refractive index | Abbe number | Focal length |
|---|---|---|---|---|---|---|---|---|
| Embodiment 6 | | | | | | | | |
| F=1.6569mm, FNO=2.035, FOV=200deg | | | | | | | | |
| OBJ | Object side | sphere | infinity | infinity | | | | |
| 1 | First lens | sphere | 11.861 | 1.400 | glass | 1.954 | 32.319 | -7.0530 |
| 2 | | sphere | 4.0630 | 1.800 | | | | |
| 3 | Second lens | sphere | 6.419 | 0.800 | glass | 1.850 | 42.700 | -5.0183 |
| 4 | | sphere | 2.424 | 2.316 | | | | |
| 5 | Third lens | sphere | -4.2289 | 2.416 | glass | 2.003 | 19.317 | 65.1507 |
| 6 | | sphere | -5.119 | 0.100 | | | | |
| 7 | Fourth lens | sphere | 4.089 | 2.186 | glass | 1.684 | 26.810 | 12.5693 |
| 8 | | sphere | 6.0463 | 0.553 | | | | |
| STO | Aperture | sphere | infinity | 0.570 | | | | |
| 9 | Fifth lens | sphere | 4.078 | 2.431 | glass | 1.571 | 71.620 | 3.2300 |
| 11 | Sixth lens | sphere | -2.6553 | 0.700 | glass | 1.946 | 17.942 | -4.2025 |
| 12 | | sphere | -8.7991 | 0.386 | | | | |
| 13 | Seventh lens | asphere | 4.9740 | 2.113 | glass | 1.616 | 63.590 | 6.6730 |
| 14 | | asphere | -20.3445 | 0.500 | | | | |
| 15 | Filter | sphere | infinity | 0.400 | glass | 1.5233 | 54.5 | |
| 16 | | sphere | infinity | 1.432 | | | | |
| 17 | Protective glass | sphere | infinity | 0.400 | glass | 1.5233 | 54.5 | |
| 18 | | sphere | infinity | 0.127 | | | | |
| IMG | Image plane | sphere | infinity | 0.000 | | | | |

In the Embodiment 6, Table 12 shows the higher-order term coefficients that can be used for each aspherical lens in the Embodiment 6. Wherein, each aspherical surface shape can be defined by the formula given in the Embodiment 1.

Table 12

| | | |
|---|---|---|
| Embodiment 6 | | |
| Surface number | 13 | 14 |
| K | -3.73890E-01 | -1.00135E+01 |
| A4 | -2.64427E-03 | 8.83831E-04 |
| A6 | -5.16151E-04 | 1.48730E-04 |
| A8 | 3.21727E-04 | -7.52551E-05 |
| A10 | -7.63279E-05 | 4.89925E-05 |
| A12 | 9.27489E-06 | -1.19050E-05 |
| A14 | -6.11315E-07 | 1.41787E-06 |

(continued)

| Embodiment 6 | | |
|---|---|---|
| Surface number | 13 | 14 |
| A16 | 3.73233E-08 | -5.58500E-08 |

Referring to FIG. 12, it can be seen from (A) a spherical aberration diagram, (B) an astigmatism curve diagram, and (C) a distortion diagram in FIG. 12 that, the spherical aberration value, astigmatism, and distortion of the optical lens 100 are well controlled, so that the optical lens 100 of this embodiment has a good imaging quality. In addition, regarding the wavelengths corresponding to the curves in (A) in Figure 12, (B) in Figure 12, and (C) in Figure 12, please refer to the contents described in (A) in Figure 2, (B) in Figure 2, and (C) in Figure 2 in the Embodiment 1 and will not be described again here.

Embodiment 7

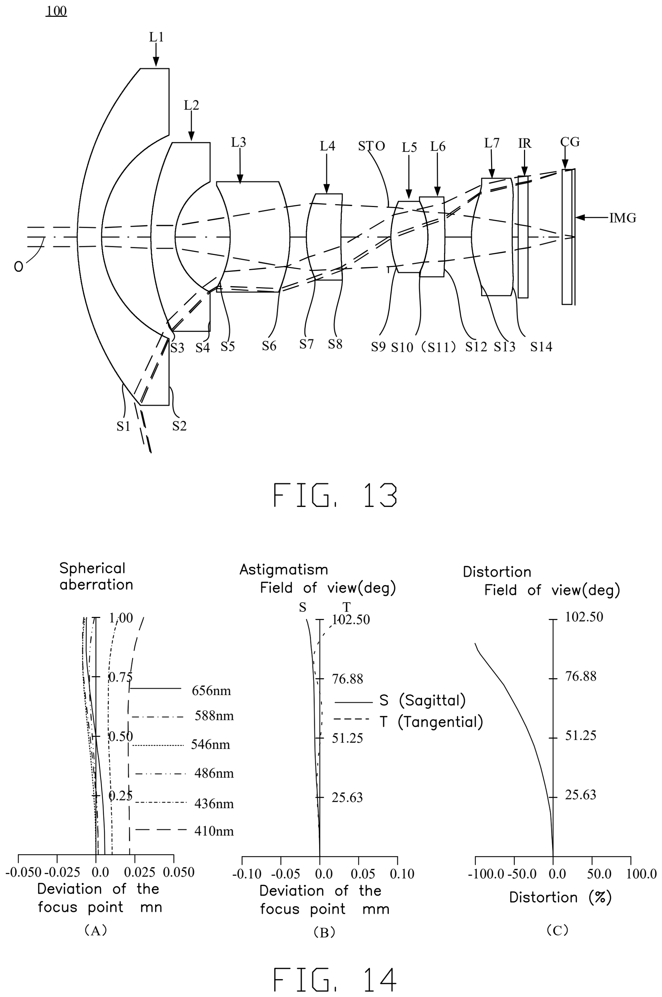

FIG. 13 is a schematic structural diagram of the optical lens 100 of the Embodiment 7, the optical lens 100 sequentially includes a first lens L1, a second lens L2, a third lens L3, a fourth lens L4, an aperture STO, a fifth lens L5, a sixth lens L6, a seventh lens L7, a filter IR, and a protective glass CG along an optical axis from an object side to an imaging side.
In the illustrated embodiment, the refractive powers of the first lens to the seventh lens are the same as those in Embodiment 1.
In the illustrated embodiment, except that the imaging side surface of the fourth lens is concave near the optical axis and the imaging side surface of the seventh lens is concave near the optical axis, the shapes of the object side surfaces and imaging side surfaces of the other lenses are the same as those in Embodiment 1.
The other parameters of the optical lens 100 are given in Table 13. The definitions of each parameter can be obtained from the description of the previous embodiment, which will not be repeated here.

Table 13

| Embodiment 7 | | | | | | | | |
|---|---|---|---|---|---|---|---|---|
| F=1.6672mm, FNO=2.035, FOV=205deg | | | | | | | | |
| Surface number | Surface name | Surface type | Y radius | Thickness | Material | Refractive index | Abbe number | Focal length |
| OBJ | Object side | sphere | infinity | infinity | | | | |
| 1 | First lens | sphere | 11.011 | 1.000 | glass | 1.954 | 32.319 | -9.2966 |
| 2 | | sphere | 4.7120 | 2.037 | | | | |
| 3 | Second lens | sphere | 9.452 | 1.000 | glass | 1.850 | 42.696 | -4.5036 |
| 4 | | sphere | 2.603 | 2.274 | | | | |
| 5 | Third lens | sphere | -4.4947 | 2.468 | glass | 2.003 | 19.317 | -82.5926 |
| 6 | | sphere | -6.063 | 0.675 | | | | |
| 7 | Fourth lens | sphere | 4.454 | 1.424 | glass | 1.684 | 26.813 | 7.9265 |
| 8 | | sphere | 20.8070 | 1.970 | | | | |
| STO | Aperture | sphere | infinity | 0.100 | | | | |
| 9 | Fifth lens | sphere | 3.782 | 1.529 | glass | 1.571 | 71.616 | 3.4153 |
| 11 | Sixth lens | sphere | -3.4615 | 0.700 | glass | 1.946 | 17.942 | -4.0672 |
| 12 | | sphere | -33.9936 | 1.098 | | | | |
| 13 | Seventh lens | asphere | 4.1486 | 1.683 | glass | 1.616 | 63.590 | 7.6121 |
| 14 | | asphere | 29.4285 | 0.250 | | | | |
| 15 | Filter | sphere | infinity | 0.400 | glass | 1.5233 | 54.5 | |
| 16 | | sphere | infinity | 1.412 | | | | |

(continued)

| Embodiment 7 | | | | | | | | |
|---|---|---|---|---|---|---|---|---|
| F=1.6672mm, FNO=2.035, FOV=205deg | | | | | | | | |
| Surface number | Surface name | Surface type | Y radius | Thickness | Material | Refractive index | Abbe number | Focal length |
| 17 | Protective glass | sphere | infinity | 0.400 | glass | 1.5233 | 54.5 | |
| 18 | | sphere | infinity | 0.127 | | | | |
| IMG | Image plane | sphere | infinity | 0.000 | | | | |

In the Embodiment 7, Table 14 shows the higher-order term coefficients that can be used for each aspherical lens in the Embodiment 7. Wherein, each aspherical surface shape can be defined by the formula given in the Embodiment 1.

Table 14

| Embodiment 7 | | |
|---|---|---|
| Surface number | 13 | 14 |
| K | -1.12860E+00 | 2.23885E+01 |
| A4 | -3.69908E-03 | 3.66546E-05 |
| A6 | -7.68821E-04 | -4.79117E-04 |
| A8 | 3.00271E-04 | -8.72729E-05 |
| A10 | -9.16198E-05 | 4.01379E-05 |
| A12 | 9.24891E-06 | -1.17790E-05 |
| A14 | -5.60526E-07 | 1.38591E-06 |
| A16 | 3.17701E-08 | -5.35351E-08 |

Referring to FIG. 14, it can be seen from (A) a spherical aberration diagram, (B) an astigmatism curve diagram, and (C) a distortion diagram in FIG. 14 that, the spherical aberration value, astigmatism, and distortion of the optical lens 100 are well controlled, so that the optical lens 100 of this embodiment has a good imaging quality. In addition, regarding the wavelengths corresponding to the curves in (A) in Figure 14, (B) in Figure 14, and (C) in Figure 14, please refer to the contents described in (A) in Figure 2, (B) in Figure 2, and (C) in Figure 2 in the Embodiment 1 and will not be described again here.

Embodiment 8

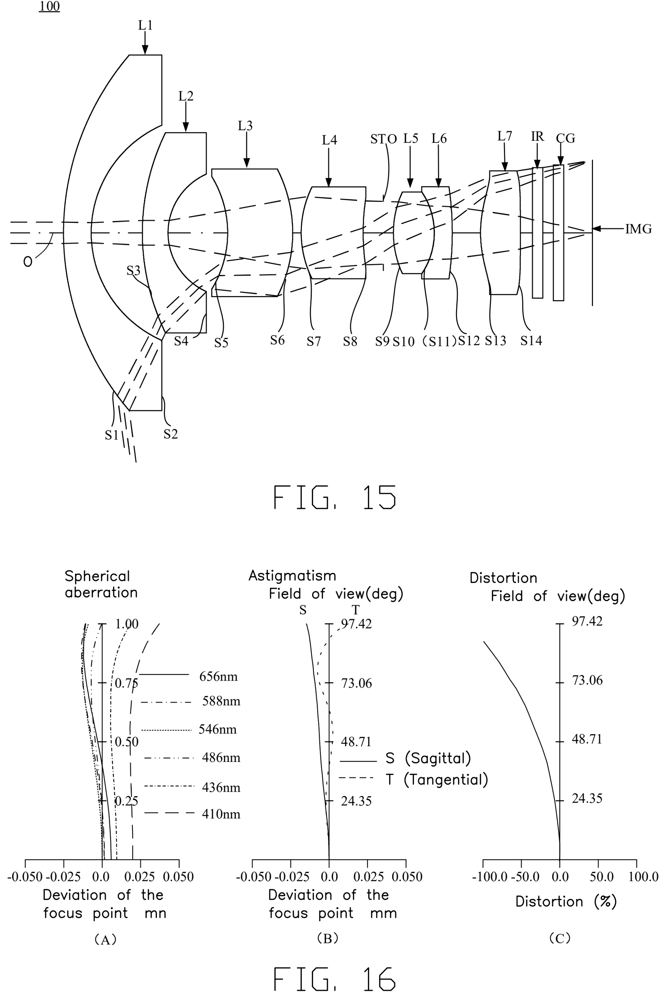

FIG. 15 is a schematic structural diagram of the optical lens 100 of the Embodiment 8, the optical lens 100 sequentially includes a first lens L1, a second lens L2, a third lens L3, a fourth lens L4, an aperture STO, a fifth lens L5, a sixth lens L6, a seventh lens L7, a filter IR, and a protective glass CG along an optical axis from an object side to an imaging side.
In the illustrated embodiment, the refractive powers of the first lens to the seventh lens are the same as those in Embodiment 1.
In the illustrated embodiment, except that the imaging side surface of the fourth lens is concave near the optical axis, the shapes of the object side surfaces and imaging side surfaces of the other lenses are the same as those in Embodiment 1.
The other parameters of the optical lens 100 are given in Table 15. The definitions of each parameter can be obtained from the description of the previous embodiment, which will not be repeated here.

Table 15

| | Embodiment 8 | | | | | | | |
|---|---|---|---|---|---|---|---|---|
| | F=1.7137mm, FNO=2.035, FOV=194.83deg | | | | | | | |
| Surface number | Surface name | Surface type | Y radius | Thickness | Material | Refractive index | Abbe number | Focal length |
| OBJ | Object side | sphere | infinity | infinity | | | | |
| 1 | First lens | sphere | 10.973 | 1.079 | glass | 1.954 | 32.319 | -9.2761 |
| 2 | | sphere | 4.6810 | 1.995 | | | | |
| 3 | Second lens | sphere | 9.192 | 1.000 | glass | 1.850 | 42.696 | -4.4665 |
| 4 | | sphere | 2.563 | 2.324 | | | | |
| 5 | Third lens | sphere | -4.3296 | 2.535 | glass | 2.003 | 19.317 | 1115.198 |
| 6 | | sphere | -5.628 | 0.333 | | | | |
| 7 | Fourth lens | sphere | 4.133 | 2.415 | glass | 1.684 | 26.813 | 9.0714 |
| 8 | | sphere | 9.2542 | 0.789 | | | | |
| STO | Aperture | sphere | infinity | 0.389 | | | | |
| 9 | Fifth lens | sphere | 3.882 | 1.595 | glass | 1.571 | 71.616 | 3.1872 |
| 11 | Sixth lens | sphere | -2.9354 | 0.700 | glass | 1.946 | 17.942 | -4.1010 |
| 12 | | sphere | -12.9513 | 1.102 | | | | |
| 13 | Seventh lens | asphere | 4.6667 | 1.554 | glass | 1.616 | 63.590 | 7.4537 |
| 14 | | asphere | -340.7828 | 0.472 | | | | |
| 15 | Filter | sphere | infinity | 0.400 | glass | 1.5233 | 54.5 | |
| 16 | | sphere | infinity | 0.412 | | | | |
| 17 | Protective glass | sphere | infinity | 0.400 | glass | 1.5233 | 54.5 | |
| 18 | | sphere | infinity | 1.127 | | | | |
| IMG | Image plane | sphere | infinity | 0.000 | | | | |

In the Embodiment 8, Table 16 shows the higher-order term coefficients that can be used for each aspherical lens in the Embodiment 8. Wherein, each aspherical surface shape can be defined by the formula given in the Embodiment 1.

Table 16

| Embodiment 8 | | |
|---|---|---|
| Surface number | 13 | 14 |
| K | -1.39314E+00 | 8.00000E+01 |
| A4 | -3.79463E-03 | -6.04577E-04 |
| A6 | -6.87367E-04 | -3.90019E-04 |
| A8 | 2.62486E-04 | -7.60100E-05 |
| A10 | -8.29226E-05 | 4.14144E-05 |
| A12 | 9.24891E-06 | -1.17790E-05 |
| A14 | -5.60526E-07 | 1.38591E-06 |
| A16 | 3.17701E-08 | -5.35351E-08 |

Referring to FIG. 16, it can be seen from (A) a spherical aberration diagram, (B) an astigmatism curve diagram, and (C) a distortion diagram in FIG. 16 that, the spherical aberration value, astigmatism, and distortion of the optical lens 100 are well controlled, so that the optical lens 100 of this embodiment has a good imaging quality. In addition, regarding the wavelengths corresponding to the curves in (A) in Figure 16, (B) in Figure 16, and (C) in Figure 16, please refer to the contents described in (A) in Figure 2, (B) in Figure 2, and (C) in Figure 2 in the Embodiment 1 and will not be described again here.

Referring to Table 17, Table 17 is a summary of the ratios of each relational expression in the Embodiment 1 to the Embodiment 8 of the present disclosure.

Table 17

| Relational expression | Embodiment 1 | Embodiment 2 | Embodiment 3 | Embodiment 4 | Embodiment 5 | Embodiment 6 | Embodiment 7 | Embodiment 8 |
|---|---|---|---|---|---|---|---|---|
| IMGH/F | 1.794 | 1.743 | 1.742 | 1.743 | 1.741 | 1.743 | 1.728 | 1.682 |
| FOV (unit: deg) | 200 | 200 | 200 | 200 | 200 | 200 | 205 | 194.83 |
| TTL/IMGH | 7.152 | 7.198 | 7.157 | 7.166 | 7.149 | 7.145 | 7.131 | 7.154 |
| TTL/F | 12.830 | 12.543 | 12.463 | 12.490 | 12.446 | 12.451 | 12.325 | 12.032 |
| CT45/CT34 | 10.917 | 5.296 | 7.661 | 5.196 | 11.032 | 11.225 | 3.069 | 3.536 |
| F1/F | -4.537 | -4.387 | -4.398 | -4.377 | -4.261 | -4.257 | -5.576 | -5.413 |
| F4/F | 3.591 | 6.514 | 6.592 | 6.518 | 7.319 | 7.586 | 4.754 | 5.293 |
| F1/F2 | 1.855 | 1.515 | 1.512 | 1.509 | 1.419 | 1.405 | 2.064 | 2.077 |
| SD1/SD3 | 2.084 | 2.047 | 2.049 | 2.044 | 2.057 | 2.051 | 1.784 | 1.777 |
| SD3/IMGH | 1.189 | 1.228 | 1.225 | 1.225 | 1.212 | 1.214 | 1.383 | 1.376 |
| SD8/SD9 | 1.161 | 0.943 | 0.968 | 0.942 | 0.945 | 0.945 | 1.177 | 0.988 |
| R10/SD10 | -1.936 | -1.623 | -1.61 | -1.627 | -1.666 | -1.680 | -2.302 | -1.812 |
| CT3/SAGS5 | -2.594 | -4.694 | -4.788 | -4.67 | -4.715 | -4.591 | -4.406 | -4.118 |
| CT5/ET5 | 1.352 | 1.506 | 1.497 | 1.505 | 1.475 | 1.463 | 1.668 | 2.032 |
| CT7/ET7 | 1.363 | 1.278 | 1.280 | 1.278 | 1.288 | 1.291 | 1.395 | 1.486 |
| R6/R5 | 1.286 | 1.234 | 1.235 | 1.233 | 1.214 | 1.210 | 1.349 | 1.300 |
| R9/R10 | -1.434 | -1.610 | -1.601 | -1.608 | -1.559 | -1.536 | -1.093 | -1.322 |
| R11/R12 | 0.042 | 0.274 | 0.279 | 0.275 | 0.300 | 0.302 | 0.102 | 0.227 |
| F1/CT1 | -5.212 | -5.184 | -5.199 | -5.183 | -5.045 | -5.038 | -9.297 | -8.601 |
| F7/CT7 | 1.966 | 3.324 | 3.350 | 3.327 | 3.180 | 3.157 | 4.523 | 4.798 |
| (CT1+CT2)/CT12 | 0.932 | 1.204 | 1.224 | 1.216 | 1.209 | 1.222 | 0.982 | 1.042 |
| DOS/TTL | 0.546 | 0.556 | 0.553 | 0.555 | 0.563 | 0.561 | 0.625 | 0.605 |
| FOV*F/IMGH (unit: deg) | 111.486 | 114.765 | 114.842 | 114.755 | 114.873 | 114.764 | 118.610 | 115.840 |
| CTMAX/CTMIN | 4.122 | 3.571 | 3.571 | 3.578 | 3.511 | 3.473 | 3.526 | 3.621 |
| FNO | 2.050 | 2.050 | 2.050 | 2.050 | 2.035 | 2.035 | 2.035 | 2.035 |
| FOV/FNO (unit: deg) | 97.561 | 97.561 | 97.561 | 97.561 | 98.280 | 98.280 | 100.737 | 95.740 |
| F2/F | -2.446 | -2.896 | -2.909 | -2.900 | -3.003 | -3.029 | -2.701 | -2.606 |
| |F3/F| | 46.414 | 51.962 | 51.441 | 50.589 | 39.591 | 39.321 | 49.540 | 650.754 |
| F5/F | 2.725 | 1.929 | 1.931 | 1.927 | 1.931 | 1.949 | 2.049 | 1.860 |
| F6/F | -1.981 | -2.359 | -2.384 | -2.362 | -2.494 | -2.536 | -2.44 | -2.393 |
| F7/F | 3.022 | 4.239 | 4.238 | 4.2341 | 4.063 | 4.027 | 4.566 | 4.349 |

(continued)

| Relational expression | Embodiment 1 | Embodiment 2 | Embodiment 3 | Embodiment 4 | Embodiment 5 | Embodiment 6 | Embodiment 7 | Embodiment 8 |
|---|---|---|---|---|---|---|---|---|
| F2/CT2 | -4.918 | -5.989 | -6.018 | -6.009 | -6.221 | -6.273 | -4.504 | -4.466 |
| \|F3/CT3\| | 49.098 | 34.384 | 34.060 | 33.478 | 26.699 | 26.966 | 33.460 | 439.965 |
| F4/CT4 | 2.762 | 5.647 | 5.706 | 5.651 | 5.496 | 5.750 | 5.568 | 3.757 |
| F5/CT5 | 1.777 | 1.325 | 1.320 | 1.329 | 1.336 | 1.329 | 2.233 | 1.998 |
| F6/CT6 | -5.31 | -5.574 | -5.638 | -5.593 | -5.906 | -6.004 | -5.810 | -5.859 |
| R1/R2 | 2.821 | 2.839 | 2.830 | 2.847 | 2.915 | 2.919 | 2.337 | 2.344 |
| R3/R4 | 5.389 | 2.678 | 2.634 | 2.669 | 2.668 | 2.648 | 3.632 | 3.587 |
| \|R7/R8\| | 0.452 | 0.576 | 0.582 | 0.575 | 0.662 | 0.676 | 0.214 | 0.447 |
| \|R13/R14\| | 0.991 | 0.284 | 0.269 | 0.283 | 0.240 | 0.244 | 0.141 | 0.014 |
| CT1/ET1 | 0.897 | 0.889 | 0.893 | 0.884 | 0.861 | 0.860 | 0.842 | 0.848 |
| CT2/ET2 | 0.493 | 0.656 | 0.668 | 0.657 | 0.659 | 0.661 | 0.639 | 0.626 |
| CT3/ET3 | 0.991 | 0.992 | 0.990 | 0.992 | 0.993 | 0.994 | 0.963 | 0.994 |
| CT4/ET4 | 1.283 | 1.189 | 1.185 | 1.188 | 1.149 | 1.147 | 1.294 | 1.234 |
| CT6/ET6 | 0.602 | 0.657 | 0.655 | 0.655 | 0.675 | 0.678 | 0.699 | 0.662 |

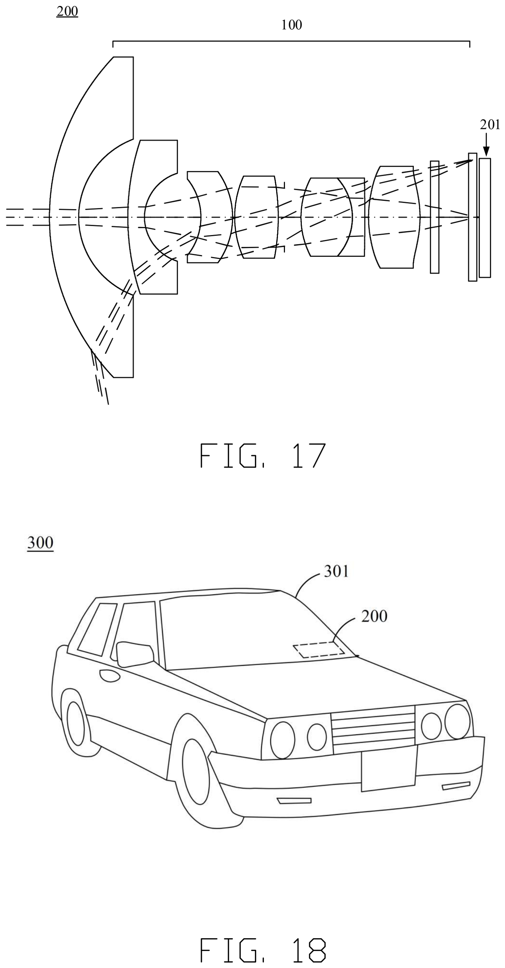

Referring to FIG. 17, the present disclosure also discloses an image module 200. The image module 200 includes an imaging sensor 201 and the optical lens 10 as described in any of the above embodiments. The imaging sensor 201 is arranged on the imaging side of the optical lens 10. A photosensitive surface of the imaging sensor 201 is located on the image plane IMG of the optical lens 10, and the light from the object passing through the lenses and transmitted to the photosensitive surface can be converted into an electrical signal of the image. The imaging sensor 201 may be a complementary metal oxide semiconductor (CMOS) or a charge-coupled device (CCD). The image module 200 may be an imaging module integrated in a terminal device 300 or an independent lens. It can be understood that the image module 200 with the above-mentioned optical lens 100 also has all the technical effects of the above-mentioned optical lens 100. That is, the image module 200 can have a larger field of view while can meet the design requirements of miniaturization of the optical lens 100. Since the above technical effects have been described in detail in the embodiments of the optical lens 100, they will not be repeated here.

Referring to FIG. 18, the present disclosure also discloses a terminal device 300. The terminal device 300 includes a main body 301 and the above-mentioned image module 200. The image module 200 is arranged in the main body 301. The terminal device 300 may be, but is not limited to, a mobile phone, a tablet, a laptop, a smart watch, a vehicle-mounted device, an unmanned aerial vehicle, or a monitor, etc. Referring to FIG. 18, the terminal device 300 is applied in a vehicle, at this time, the main body 301 may be a vehicle body, and the image module 200 is arranged on the vehicle body, for example, may be inside or outside the vehicle body.

Referring to FIG. 17, the terminal device 300 may be a vehicle, in which case the main body 301 may be a vehicle body, and the image module 200 may be arranged on the vehicle body, for example, inside or outside the vehicle body.

It can be understood that the terminal device 300 with the above-mentioned image module 200 also has all the technical effects of the above-mentioned optical lens 100. That is, the terminal device 300 can meet the design requirement of high-pixel imaging while meet the design requirements of miniaturization of the optical lens 100. Since the above technical effects have been described in detail in the embodiments of the optical lens 100, they will not be repeated here.

The optical lens, image module and terminal device disclosed in the embodiments of the present invention have been introduced in detail above. Specific examples are used in this application to illustrate the principles and implementation methods of the present invention. The description of the above embodiments is only used to help understand the optical lens, image module and electronic device of the invention and its core idea; at the same time, for those of ordinary skill in the field, there will be changes in the specific implementation and application scope based on the ideas of the present invention. In summary, the content of this description should not be understood as a limitation of the present invention.

**Claims**

1. An optical lens (100) with a total of seven lenses having refractive power, from an object side to an imaging side along an optical axis (O), sequentially comprising:

   a first lens (L1) having negative refractive power, an object side surface (S1) of the first lens (L1) being convex near the optical axis (O), and an imaging side surface (S2) of the first lens (L1) being concave near the optical axis (O);
   a second lens (L2) having negative refractive power, an object side surface (S3) of the second lens (L2) being convex near the optical axis (O), and an imaging side surface (S4) of the second lens (L2) being concave near the optical axis (O);
   a third lens (L3) having refractive power, an object side surface (S5) of the third lens (L3) being concave near the optical axis (O), and an imaging side surface (S6) of the third lens (L3) being convex near the optical axis (O);
   a fourth lens (L4) having positive refractive power, an object side surface (S7) of the fourth lens (L4) being convex near the optical axis (O);
   a fifth lens (L5) having positive refractive power, an object side surface (S9) and an imaging side surface (S10) of the fifth lens (L5) being both convex near the optical axis (O);
   a sixth lens (L6) having negative refractive power, an object side surface (S11) of the sixth lens (L6) being concave near the optical axis (O), and an imaging side surface (S12) of the sixth lens (L6) being convex near the optical axis (O); and
   a seventh lens (L7) having positive refractive power, an object side surface (S13) of the seventh lens (L7) being convex near the optical axis (O);
   the optical lens (100) satisfying following conditional expressions:

   $$190\text{deg} \leq FOV \leq 210\text{deg, and } 1.65 < IMGH/F < 1.8;$$

   wherein, FOV is the maximum field of view angle of the optical lens (100), IMGH is half of an image height corresponding to the maximum field of view angle of the optical lens (100), and F is a focal length of the optical lens (100).

2. The optical lens (100) of claim 1, wherein the optical lens (100) further satisfies at least one of following conditional expressions:

   $$7 < TTL/IMGH < 7.3,$$

   $$12 < TTL/F < 13,$$

   and

   $$CT45/CT34 > 2,$$

   wherein, TTL is a distance from the object side surface (S1) of the first lens (L1) to an image plane (IMG) of the optical lens (100) along the optical axis (O), CT45 is a distance along the optical axis (O) from an imaging side surface (S8) of the fourth lens (L4) to the object side surface (S9) of the fifth lens (L5), and CT34 is a distance along the optical axis (O) from the imaging side surface (S5) of the third lens (L3) to the object side surface (S7) of the fourth lens (L4).

3. The optical lens (100) of claim 1, wherein the optical lens (100) further satisfies at least one of following conditional expressions:

   $$-6 < F1/F < -4,$$

   $$3 < F4/F < 8,$$

   and

$$1<F1/F2<3,$$

wherein, F1 is a focal length of the first lens (L1), F4 is a focal length of the fourth lens (L4), and F2 is a focal length of the second lens (L2).

4. The optical lens (100) of claim 1, wherein the optical lens (100) further satisfies at least one of following conditional expressions:

$$1.5<SD1/SD3<2.1,$$

$$1.1<SD3/IMGH<1.4,$$

$$0.9<SD8/SD9<1.2,$$

and

$$-3<R10/SD10<-1,$$

wherein, SD1 is the maximum effective semi-aperture of the object side surface (S1) of the first lens (L1), SD3 is the maximum effective semi-aperture of the object side surface (S3) of the second lens (L2), SD8 is the maximum effective semi-aperture of an imaging side surface (S8) of the fourth lens (L4), SD9 is the maximum effective semi-aperture of the object side surface (S10) of the fifth lens (L5), R10 is a radius of curvature at the imaging side surface (S10) of the fifth lens (L5) at the optical axis (O), and SD10 is the maximum effective semi-aperture of the imaging side surface (S10) of the fifth lens (L5).

5. The optical lens (100) of claim 1, wherein the optical lens (100) further satisfies at least one of following conditional expressions:

$$-5<CT3/SAGS5<-2,$$

$$1.2<CT5/ET5<2.1,$$

and

$$1.2<CT7/ET7<1.5,$$

wherein, CT3 is a thickness of the third lens (L3) at the optical axis (O), SAGS5 is a distance along the optical axis (O) from the maximum effective semi-aperture of the object side surface (S5) of the third lens (L3) to an intersection point of the object side surface (S1) of the first lens (L1) and the optical axis (O), CT5 is a thickness of the fifth lens (L5) at the optical axis (O), ET5 is a distance in a direction parallel to the optical axis (O) from the maximum effective aperture of the object side surface (S9) of the fifth lens (L5) to the maximum effective aperture of the imaging side surface (S10) of the fifth lens (L5), CT7 is a thickness of the seventh lens (L7) at the optical axis (O), and ET7 is a distance in the direction parallel to the optical axis (O) from the maximum effective aperture of the object side surface (S13) of the seventh lens (L7) to the maximum effective aperture of an imaging side surface (S14) of the seventh lens (L7).

6. The optical lens (100) of claim 1, wherein the optical lens (100) further satisfies at least one of following conditional expressions:

$$1.2<R6/R5<1.4,$$

$$-2<R9/R10<-1,$$

and

$$R11/R12<0.5,$$

wherein, R5 is a radius of curvature of the object side surface (S5) of the third lens (L3) at the optical axis (O), R6 is a radius of curvature of the imaging side surface (S6) of the third lens (L3) at the optical axis (O), R9 is a radius of curvature of the object side surface (S9) of the fifth lens (L5) at the optical axis (O), and R10 is a radius of curvature of the imaging side surface (S10) of the fifth lens (L5) at the optical axis (O), R11 is a radius of curvature of the object side surface (S11) of the sixth lens (L6) at the optical axis (O), and R12 is a radius of curvature of the imaging side surface (S12) of the sixth lens (L6) at the optical axis (O).

7. The optical lens (100) of claim 1, wherein the optical lens (100) further satisfies at least one of following conditional expressions:

$$-10<F1/CT1<-5,$$

$$F7/CT7<5,$$

and

$$0.9<(CT1+CT2)/CT12<1.3,$$

wherein, F1 is a focal length of the first lens (L1), CT1 is a thickness of the first lens (L1) at the optical axis (O), F7 is a focal length of the seventh lens (L7), CT7 is a thickness of the seventh lens (L7) at the optical axis (O), CT1 is a thickness of the first lens (L1) at the optical axis (O), CT2 is a thickness of the second lens (L2) at the optical axis (O), and CT12 is a distance from the imaging side surface (S2) of the first lens (L1) to the object side surface (S3) of the second lens (L2) along the optical axis (O).

8. The optical lens (100) of claim 1, wherein the optical lens (100) further satisfies at least one of following conditional expressions:

$$0.52<DOS/TTL<0.65,$$

$$110deg<FOV*F/IMGH<120deg,$$

and

$$3<CTMAX/CTMIN<4.2,$$

wherein, DOS is a distance from the object side surface (S1) of the first lens (L1) to the aperture (STO) along the optical axis (O), TTL is a distance from the object side surface (S1) of the first lens (L1) to an image plane (IMG) of the optical lens (100) along the optical axis (O), CTMAX is the maximum thickness of a lens among the first lens (L1) to the seventh lens (L7) along the optical axis (O), and CTMIN is the minimum thickness of a lens among the first lens (L1) to the seventh lens (L7) along the optical axis (O).

9. The optical lens (100) of claim 1, wherein the optical lens (100) further satisfies at least one of following conditional expressions:

$$95deg<FOV/FNO<101deg,$$

and

$$FNO<2.1,$$

wherein, FNO is an aperture number of the optical lens (100).

10. The optical lens (100) of claim 1, wherein the optical lens (100) further satisfies at least one of following conditional expressions:

$$-4<F2/F<-2,$$

$$|F3/F|>30,$$

$$1<F5/F<3,$$

$$F6/F<-1.5,$$

and

$$3<F7/F<5,$$

wherein, F2 is a focal length of the second lens (L2), F3 is a focal length of the third lens (L3), F5 is a focal length of the fifth lens (L5), F6 is a focal length of the sixth lens (L6), and F7 is a focal length of the seventh lens (L7).

11. The optical lens (100) of claim 1, wherein the optical lens (100) further satisfies at least one of following conditional expressions:

$$-8<F2/CT2<-4,$$

$$|F3/CT3|>20,$$

$$2<F4/CT4<6,$$

$$1<F5/CT5<3,$$

and

$$F6/CT6<-5,$$

wherein, F2 is a focal length of the second lens (L2), CT2 is a thickness of the second lens (L2) at the optical axis (O), F3 is a focal length of the third lens (L3), CT3 is a thickness of the third lens (L3) at the optical axis (O), F4 is a focal length of the fourth lens (L4), CT4 is a thickness of the fourth lens (L4) at the optical axis (O), F5 is a focal length of the fifth lens (L5), CT5 is a thickness of the fifth lens (L5) at the optical axis (O), F6 is a focal length of the sixth lens (L6), and CT6 is a thickness of the sixth lens (L6) at the optical axis (O).

12. The optical lens (100) of claim 1, wherein the optical lens (100) further satisfies at least one of following conditional expressions:

$$0.8<CT1/ET1<0.95,$$

$$0.4<CT2/ET2<0.7,$$

$$0.9<CT3/ET3<1,$$

$$1.1<CT4/ET4<1.3,$$

and

$$0.55 < CT6/ET6 < 0.75,$$

wherein, CT1 is a thickness of the first lens (L1) at the optical axis (O), ET1 is a distance in the direction parallel to the optical axis (O) from the maximum effective aperture of the object side surface (S1) of the first lens (L1) to the maximum effective aperture of the imaging side surface (S2) of the first lens (L1), CT2 is the thickness of the second lens (L2) at the optical axis (O), ET2 is a distance in the direction parallel to the optical axis (O) from the maximum effective aperture of the object side surface (S3) of the second lens (L2) to the maximum effective aperture of the imaging side surface (S4) of the second lens L2, CT3 is the thickness of the third lens (L3) at the optical axis (O), ET3 is the distance from the maximum effective aperture on the object side surface (S5) of the third lens L3 to the maximum effective aperture on the imaging side surface (S6) of the third lens L3 along the optical axis (O), CT4 is the thickness of the fourth lens (L4) on the optical axis (O), and ET4 is a distance in the direction parallel to the optical axis (O) from the maximum effective aperture of the object side surface (S7) of the fourth lens (L4) to the maximum effective aperture of an imaging side surface (S8) of the fourth lens (L4), CT6 is a thickness of the sixth lens (L6) at the optical axis (O), ET6 is a distance in the direction parallel to the optical axis (O) from the maximum effective aperture of the object side surface (S11) of the sixth lens L6 to the maximum effective aperture of the imaging side surface (S12) of the sixth lens L6.

13. The optical lens (100) of claim 1, wherein the optical lens (100) further satisfies at least one of following conditional expressions:

$$R1/R2 < 3,$$

$$2 < R3/R4 < 6,$$

$$|R7/R8| < 1,$$

and

$$|R13/R14| < 1,$$

wherein, R1 is a radius of curvature of the object side surface (S1) of the first lens (L1) at the optical axis (O), R2 is a radius of curvature of the imaging side surface (S2) of the first lens (L1) at the optical axis (O), R3 is a radius of curvature of the object side surface (S3) of the second lens (L2) at the optical axis (O), R4 is a radius of curvature of the imaging side surface (S4) of the second lens (L2) at the optical axis (O), R7 is a radius of curvature of the object side surface (S7) of the fourth lens (L4) at the optical axis (O), R8 is a radius of curvature of an imaging side surface (S8) of the fourth lens (L4) at the optical axis (O), R13 is a radius of curvature of the object side surface (S13) of the seventh lens (L7) at the optical axis (O), and R14 is a radius of curvature of an imaging side surface (S14) of the seventh lens (L7) at the optical axis (O).

14. An image module (200) comprising an imaging sensor (201) and the optical lens (100) of any one of claims 1 to 13, wherein the imaging sensor (201) is arranged on the imaging side of the optical lens (100).

15. A terminal device (300) comprising a main body (301) and the image module (200) of claim 14, wherein the image module (200) is arranged in the main body (301).

FIG. 1

FIG. 2

100

FIG. 3

FIG. 4

FIG. 5

Spherical aberration

1.00
0.75
0.50
0.25

—— 656nm
—·—·— 588nm
········ 546nm
—··—··— 486nm
—···—···— 436nm
— — — 410nm

-0.02  -0.01  0.0  0.01  0.02
Deviation of the focus point  mm

(A)

Astigmatism
Field of view(deg)

S    T
100.00
75.00
50.00
25.00

—— S (Sagittal)
— — — T (Tangential)

-0.050 -0.025  0.0  0.025  0.050
Deviation of the focus point  mm

(B)

Distortion
Field of view(deg)

100.00
75.00
50.00
25.00

-100.0 -50.0  0.0  50.0  100.0
Distortion (%)

(C)

FIG. 6

FIG. 7

FIG. 8

FIG. 9

Spherical aberration

656nm
588nm
546nm
486nm
436nm
410nm

Deviation of the focus point mn

(A)

Astigmatism
Field of view(deg)

S (Sagittal)
T (Tangential)

Deviation of the focus point mm

(B)

Distortion
Field of view(deg)

Distortion (%)

(C)

FIG. 10

100

FIG. 11

Spherical aberration

1,00

0.75

——————— 656nm

—·—·—·— 588nm

·············· 546nm

—··—··— 486nm

—···—···— 436nm

— — — 410nm

0.50

0.25

-0.050 -0.025 0.0 0.025 0.050

Deviation of the
focus point mn

(A)

Astigmatism
Field of view(deg)

S          T

100.00

75.00

50.00

——— S (Sagittal)

- - - T (Tangential)

25.00

-0.2 -0.1 0.0 0.1 0.2

Deviation of the
focus point mm

(B)

Distortion
Field of view(deg)

100.00

75.00

50.00

25.00

-100.0 -50.0 0.0 50.0 100.0

Distortion (%)

(C)

FIG. 12

FIG. 13

Spherical aberration

656nm
588nm
546nm
486nm
436nm
410nm

Deviation of the focus point mn

(A)

Astigmatism
Field of view(deg)

S (Sagittal)
T (Tangential)

Deviation of the focus point mm

(B)

Distortion
Field of view(deg)

Distortion (%)

(C)

FIG. 14

100

FIG. 15

| Spherical aberration | Astigmatism Field of view(deg) | Distortion Field of view(deg) |

656nm
588nm
546nm
486nm
436nm
410nm

S (Sagittal)
T (Tangential)

-0.050 -0.025 0.0 0.025 0.050
Deviation of the focus point mn
(A)

-0.050 -0.025 0.0 0.025 0.050
Deviation of the focus point mm
(B)

-100.0 -50.0 0.0 50.0 100.0
Distortion (%)
(C)

FIG. 16

FIG. 17

FIG. 18